# EUROPÄISCHE PATENTSCHRIFT

(11) **EP 1 877 232 B1**
(45) Veröffentlichungstag und Bekanntmachung des Hinweises auf die Patenterteilung: **14.05.2014**
(21) Anmeldenummer: 06753453.7
(22) Anmeldetag: 28.04.2006
(51) Int. Cl.: B27K 3/15, B27K 5/00, B27N 7/00, B05D 7/08, B05D 3/06, C08L 75/04, C08L 79/04

(54) **VERFAHREN ZUR BEHANDLUNG VON HOLZOBERFLÄCHEN**
METHOD FOR TREATING WOOD SURFACES
PROCEDE DE TRAITEMENT DE SURFACES DE BOIS

(30) Priorität: 02.05.2005 DE 102005020387
(43) Veröffentlichungstag der Anmeldung: 16.01.2008
(73) Patentinhaber: BASF SE, 67056 Ludwigshafen (DE)
(72) Erfinder: KINGMA, Arend Jouke, 67069 Ludwigshafen (DE); WAGNER, Eva, 67346 Speyer (DE); GRAF, Karl, 67067 Ludwigshafen (DE); MENZEL, Klaus, 67069 Ludwigshafen (DE); MILITZ, Holger, 37120 Bovenden (DE); KRAUSE, Andreas, 37077 Göttingen (DE); XIE, Yanjun, 37075 Göttingen (DE); MAI, Carsten, 37075 Göttingen (DE)
(86) Internationale Anmeldenummer: PCT/EP2006/004020
(87) Internationale Veröffentlichungsnummer: WO 2006/117163

(56) Entgegenhaltungen:
- WO-A-92/10311
- WO-A-2004/033170
- DE-A1- 2 535 274

## Beschreibung

Die vorliegende Erfindung betrifft ein Verfahren zum Behandeln der Oberflächen von Holz oder Holzwerkstoffen mit Oberflächenbehandlungsmitteln und die so behandelten Hölzer oder Holzwerkstoffe.

Hölzer und Holzwerkstoffe wie Furniere oder Formkörper aus feinteiligen Holzmaterialien werden zu dekorativen Zwecken und zum Schutz der Holzoberflächen vor mechanischen und witterungsbedingten Einflüssen häufig mit Oberflächenbehandlungsmitteln wie Beizen, Lacken oder sonstigen Beschichtungen versehen (siehe z.B. H. Nimz et al. "Wood - Wood based Materials" Kapitel 2.4 und W. Hansemann, "Wood - Surface Treatment" in Ullmanns Encyclopedia of Industrial Chemistry, 5th ed. on CD-ROM, Wiley-VCH - Weinheim 1997).

Bei polymergebundenen Oberflächenbehandlungsmitteln, d.h. bei Beschichtungssystemen wie Lasuren und Lacken, ist die Haftung der erhaltenen Beschichtung auf der Oberfläche des Holzes bzw. Holzwerkstoffs problematisch und zwar sowohl im feuchten als auch im festen, d.h. getrockneten bzw. gehärteten Zustand. Bei wässrig basierten Oberflächenbehandlungsmitteln stellt sich zudem häufig das Problem, dass die Holzoberfläche beim Behandeln rau wird und daher nachgeschliffen werden muss, um eine hinreichend glatte Oberfläche zu erhalten. Da hierbei auch ein Teil des Oberflächenbehandlungsmittels abgetragen wird, muss der Behandlungs- und Schleifvorgang in der Regel mehrfach wiederholt werden, was einen nicht unbeträchtlichen Aufwand darstellt.

Aus der OS 2535274 ist ein Verfahren zur Herstellung von lasurbehandelten Nadelholzprofilen, bei dem die Profile vor dem Auftragen der Lasur mit einer Lösung von reaktiven Harzen oder Bindemitteln imprägniert werden, bekannt.

WO 2004/033170 und WO 2004/033171 beschreiben die Verwendung von Imprägniermitteln auf Basis von Hydroxymethyl- oder Alkoxymethyl-modifizierten Harnstoffderivaten wie 1,3-Bis(hydroxymethyl)-4,5-dihydroxyimidazolidin-2-on, mit Alkanolen modifiziertes Bis(hydroxymethyl)-4,5-dihydroxyimidazolidinon, 1,3-Bis(hydroxymethyl)-harnstoff, 1,3-Bis(methoxymethyl)harnstoff, 1-Hydroxymethyl-3-methylharnstoff, 1,3-Bis(hydroxymethyl)imidazolidin-2-on, 1,3-Dimethyl-4,5-dihydroxyimidazolidin-2-on oder Tetra(hydroxymethyl)acetylendiharnstoff zur Verbesserung der Dauerhaftigkeit, Dimensionsstabilität und Oberflächenhärte von Holzkörpern aus Vollholz. Die Problematik bei der Oberflächenbehandlung von Holz oder Holzwerkstoffen wird nicht angesprochen.

Der vorliegenden Erfindung liegt somit die Aufgabe zugrunde, ein Verfahren zur Oberflächenbehandlung von Holz oder Holzwerkstoffen bereitzustellen, das die eingangs geschilderten Probleme löst.

Es wurde nun überraschenderweise gefunden, dass diese und weitere Aufgaben gelöst werden können, wenn man Holz oder einen Holzwerkstoff in an sich bekannter Weise mit einem Oberflächenbehandlungsmittel oberflächenbehandelt, wenn man das Holz, den Holzwerkstoff oder die zur Herstellung des Holzwerkstoffs verwendeten Holzmaterialien zuvor mit einer härtbaren wässrigen Zusammensetzung imprägniert, die wenigstens eine vernetzbare Verbindung enthält, die ausgewählt ist unter
α) niedermolekularen Verbindungen V, welche wenigstens zwei N-gebundene Gruppen der Formel CH₂OR, worin R für Wasserstoff oder C₁-C₄-Alkyl steht, und/oder eine zwei Stickstoffatome verbrückende 1,2-Bishydroxyethan-1,2-diyl-Gruppe aufweisen,
γ) Mischungen der Verbindung V mit wenigstens einem Alkohol, der unter C₁-C₆-Alkanolen, C₂-C₆-Polyolen und Oligoalkylenglykolen ausgewählt ist;
und anschließend einer Behandlung bei erhöhter Temperatur unterwirft.

Dementsprechend betrifft die vorliegende Erfindung ein Verfahren zum Behandeln der Oberflächen von Holz oder Holzwerkstoffen, welches die folgenden Schritte umfasst:
a) Imprägnieren von Holz, Holzwerkstoffen oder Holzmaterialien zur Herstellung von Holzwerkstoffen mit einer härtbaren wässrigen Zusammensetzung, die wenigstens eine vernetzbare Verbindung enthält, die ausgewählt ist unter
   α) niedermolekularen Verbindungen V, welche wenigstens zwei N-gebundene Gruppen der Formel CH₂OR, worin R für Wasserstoff oder C₁-C₄-Alkyl steht, und/oder eine zwei Stickstoffatome verbrückende 1,2-Bishydroxyethan-1,2-diyl-Gruppe aufweisen,
   γ) Mischungen der Verbindung V mit wenigstens einem Alkohol, der unter C₁-C₆-Alkanolen, C₂-C₆-Polyolen und Oligoalky-lenglykolen ausgewählt ist;
   wobei man die Bedingungen des Imprägnierens so wählt, dass die aufgenommene Menge an härtbaren Bestandteilen der wässrigen Zusammensetzung wenigstens 5 Gew.-%, bezogen auf die Trockenmasse des unbehandelten Holzes oder Holzwerkstoffs beträgt;
b) Behandeln des in Schritt a) erhaltenen Materials bei erhöhter Temperatur und gegebenenfalls Weiterverarbeitung zu einem Holzwerkstoff und
c) Behandeln wenigstens einer Oberfläche des zu behandelnden Holzes oder Holzwerkstoffs mit einem Oberflächenbehandlungsmittel und gegebenenfalls Trocknen der behandelten Oberfläche in an sich bekannter Weise.

Das erfindungsgemäße Verfahren ist mit einer Reihe von Vorteilen verbunden. Beschichtungen auf der Basis polymergebundener Beschichtungssysteme weisen eine bessere Haftung sowohl im feuchten als auch im nassen Zustand auf. Zudem treten bei wasserbasierten Oberflächenbehandlungsmitteln die zuvor geschilderten Probleme des Aufrauens der Oberfläche nicht auf. Außerdem lässt sich auf diese Weise das bei Behandlung mit wasserbasierten Oberflächenbehandlungsmitteln gelegentlich auftretende "Verziehen" von Holzkörpern vermeiden.

In einem ersten Schritt a) des erfindungsgemäßen Verfahrens wird das Holz bzw. der Holzwerkstoff, z.B. ein Furnierwerkstoff oder ein aus feinteiligen Holzmaterialien wie Spänen, Fasern oder Strands gebundener Holzwerkstoff, oder ein Holzmaterial, das zur Herstellung von Holzwerkstoffen verwendet wird, z.B. ein Furnier oder feinteiliges Holzmaterial, mit einer wässrigen Zusammensetzung der härtbaren Verbindung imprägniert.

Zu den feinteiligen Holzmaterialien zählen Fasern, Späne, Strands, Chips, Schnitzel und dergleichen. Unter Furnieren versteht man flächige dünne Holzmaterialien mit Dicken ≤ 5 mm, insbesondere ≤ 1 mm. Insbesondere werden in Schritt a) großformatige Teile mit Mindestabmessungen oberhalb 5 mm, speziell ≥ 10 mm und speziell großformatige Teile aus Vollholz bzw. Massivholz imprägniert.

Geeignet sind grundsätzlich alle Holzsorten, insbesondere solche, die wenigstens 30 %, insbesondere wenigstens 50 % ihres Trockengewichts an Wasser aufnehmen können und besonders bevorzugt solche, die in die Tränkbarkeitsklassen 1 und 2 gemäß DIN-EN 350-2 eingeordnet werden. Hierzu zählen beispielsweise Hölzer von Nadelbäumen wie Kiefer (pinus spp.), Fichte, Douglasie, Lärche, Pinie, Tanne, Küstentanne, Zeder, Zirbel, sowie Hölzer von Laubbäumen, z. B. Ahorn, Hardmaple, Akazie, Ayons, Birke, Birne, Buche, Eiche, Erle, Espe, Esche, Elsbeere, Hasel, Hainbuchen, Kirsche, Kastanie, Linde, amerikanischer Nussbaum, Pappel, Olive, Robinie, Ulme, Walnuss, Gummibaum, Zebrano, Weide, Zerreiche und dergleichen. Die erfindungsgemäßen Vorteile kommen insbesondere bei den folgenden Hölzern zum Tragen: Buche, Fichte, Kiefer, Pappel, Esche und Ahorn. Daher betrifft eine bevorzugte Ausführungsform der Erfindung die Oberflächenbehandlung von Holz, beziehungsweise Holzwerkstoffen, deren Holzbestandteil unter den zuvor genannten Holzwerkstoffen ausgewählt ist.

Bei den in Schritt a) eingesetzten vernetzbaren Verbindungen V, handelt es sich um niedermolekulare Verbindungen oder um Oligomere mit geringem Molekulargewicht, die in der eingesetzten wässrigen Zusammensetzung in der Regel vollständig gelöst vorliegen. Das Molekulargewicht der vernetzbaren Verbindung liegt üblicherweise unterhalb 400 Dalton. Man nimmt an, dass die Verbindungen aufgrund dieser Eigenschaften in die Zellwände des Holzes eindringen können und beim Härten die mechanische Stabilität der Zellwände verbessern und ihre durch Wasser bewirkte Quellung vermindern.

Beispiele für vernetzbare Verbindungen sind, ohne darauf beschränkt zu sein:
- 1,3-Bis(hydroxymethyl)-4,5-dihydroxyimidazolidin-2-on (DMDHEU),
- 1,3-Bis(hydroxymethyl)-4,5-dihydroxyimidazolidinon, das mit einem C₁-C₆-Alkanol, einem C₂-C₆-Polyol oder einem Oligoalkylenglykol modifiziert ist (modifiziertes DMDHEU bzw. mDMDHEU),
- 1,3-Bis(hydroxymethyl)harnstoff,
- 1,3-Bis(methoxymethyl)harnstoff;
- 1-Hydroxymethyl-3-methylharnstoff,
- 1,3-Bis(hydroxymethyl)imidazolidin-2-on (Dimethylolethylenharnstoff),
- 1,3-Bis(hydroxymethyl)-1,3-hexahydropyrimidin-2-on (Dimethylolpropylenhamstoff)
- 1,3-Bis(methoxymethyl)-4,5-dihydroxyimidazolidin-2-on (DMeDHEU),
- Tetra(hydroxymethyl)acetylendiharnstoff.

Wässrige Zusammensetzungen von Verbindungen V sind an sich bekannt, beispielsweise aus WO 2004/033171, WO 2004/033170, K. Fisher et al. "Textile Auxiliaries - Finishing Agents", Kap. 7.2.2 in Ullmann's Encyclopedia of Industrial Chemistry, 5th Ed. on CD-ROM, Wiley-VCH, Weinheim 1997 und dort zitierte Literatur, US 2,731,364, US 2,930,715, H. Diem et al. "Amino-Resins", Kap. 7.2.1 und 7.2.2 in Ullmann's Encyclopedia of Industrial Chemistry, 5th Ed. on CD-ROM, Wiley-VCH, Weinheim 1997 und dort zitierte Literatur, Houben-Weyl E20/3, S. 1811-1890, und werden üblicherweise als Vernetzer für das Textilfinishing eingesetzt. Umsetzungsprodukte von N-methylolierten Harnstoffverbindungen V mit Alkoholen, z. B. modifiziertes 1,3-Bis(hydroxymethyl)-4,5-dihydroxy-imidazolidinon-2 (mDMDHEU) sind beispielsweise aus der US 4,396,391 und der WO 98/29393 bekannt. Im Übrigen sind Verbindungen V im Handel erhältlich.

In einer bevorzugten Ausführungsform der Erfindung ist die vernetzbare Verbindung unter Harnstoffverbindungen V, die an den Stickstoffatomen der Harnstoffeinheit (N-C(O)-N) jeweils eine Gruppe CH₂OR, wie zuvor definiert, tragen, sowie den Umsetzungsprodukten derartiger Harnstoffverbindungen V mit C₁-C₆-Alkanolen, C₂-C₆-Polyolen und Oligoalkylenglykolen. Insbesondere ist die vernetzbare Verbindung ausgewählt unter 1,3-Bis(hydroxymethyl)-4,5-dihydroxyimidazolidin-2-on und einem mit einem C₁-C₆-Alkanol, einem C₂-C₆-Polyol und/oder einem Polyalkylenglykol modifizierten 1,3-Bis(hydroxymethyl)-4,5-dihydroxyimidazolidin-2-on ausgewählt. Beispiele für Polyalkylenglykole sind insbesondere die unten genannten Oligo- und Poly-C₂-C₄-alkylen-glykole.

Bei mDMDHEU handelt es sich Umsetzungsprodukte von 1,3-Bis(hydroxymethyl)-4,5-dihydroxyimidazolidinon-2 mit einem C₁-C₆-Alkanol, einem C₂-C₆-Polyol, einem Oligoethylenglykol oder Gemischen dieser Alkohole. Geeignete C₁₋₆-Alkanole sind beispielsweise Methanol, Ethanol, n-Propanol, iso-Propanol, n-Butanol und n-Pentanol, bevorzugt ist Methanol. Geeignete Polyole sind Ethylenglykol, Diethylenglykol, 1,2- und 1,3-Propylenglykol, 1,2-, 1,3-, und 1,4-Butylenglykol und Glycerin. Beispiele für geeignete Polyalkylenglykole sind insbesondere die im Folgenden genannten Oligo- und Poly-C₂-C₄-alkylenglykole. Zur Herstellung von mDMDHEU werden DMDHEU mit dem Alkanol, dem Polyol oder dem Polyalkylenglykol, gemischt. Hierbei werden der einwertige Alkohol, das Polyol, oder das Oligo- bzw. Polyalkylenglykol üblicherweise in einem Verhältnis von je 0,1 bis 2,0, insbesondere 0,2 bis 2 Moläquivalenten, bezogen auf DMDHEU, eingesetzt. Die Mischung aus DMDHEU, dem Polyol oder dem Polyalkylenglykol wird üblicherweise in Wasser bei Temperaturen von vorzugsweise 20 bis 70 °C und einem pH-Wert von vorzugsweise 1 bis 2,5 umgesetzt, wobei der pH-Wert nach der Umsetzung in der Regel auf einen Bereich von 4 bis 8 eingestellt wird.

In einer weiteren bevorzugten Ausführungsform der Erfindung ist die vernetzbare Verbindung unter wenigstens 2-fach, z.B. 2-, 3-, 4-, 5- oder 6-fach, speziell einem 3-fach methyloliertem Melamin (Poly(hydroxymethyl)melamin) und einem mit einem C₁-C₆-Alkanol, einem C₂-C₆-Polyol und/oder einem Polyalkylenglykol modifizierten Poly(hydroxymethyl)melamin ausgewählt. Beispiele für Polyalkylenglykole sind insbesondere die im Folgenden genannten Oligo- und Poly-C₂-C₄-alkylenglykole.

Die erfindungsgemäß zur Anwendung kommenden wässrigen Zusammensetzungen können auch einen oder mehrere der vorgenannten Alkohole, C₁-C₆-Alkanole, C₂-C₆-Polyole, Oligo- und Polyalkylenglykole oder Gemische dieser Alkohole enthalten. Geeignete C₁₋₆-Alkanole sind beispielsweise Methanol, Ethanol, n-Propanol, iso-Propanol, n-Butanol und n-Pentanol, bevorzugt ist Methanol. Geeignete Polyole sind Ethylenglykol, Diethylenglykol, 1,2- und 1,3-Propylenglykol, 1,2-, 1,3-, und 1,4-Butylenglykol und Glycerin. Geeignete Oligo- und Polyalkylenglykole sind insbesondere Oligo- und Poly-C₂-C₄-alkylenglykole, speziell Homo- und Cooligomere des Ethylenoxids und/oder des Propylenoxids, die gegebenenfalls in Gegenwart von niedermolekularen Startern, z.B. aliphatischen oder cycloaliphatischen Polyolen mit wenigstens 2 OH-Gruppen wie 1,3-Propandiol, 1,3- und 1,4-Butandiol, 1,5-Pentandiol, 1,6-Hexandiol, Glycerin, Trimethylolethan, Trimethylolpropan, Erythrit, und Pentaerythrit, sowie Pentite und Hexite wie Ribit, Arabit, Xylit, Dulcit, Mannit und Sorbit sowie Inosit oder aliphatischen oder cycloaliphatischen Polyaminen mit wenigstens 2 NH₂-Gruppen wie Diethylentriamin, Triethylentetramin, Tetraethylenpentamin, Propylendiamin-1,3, Dipropylentriamin, 3-Amino-1-ethylenaminopropan, Hexamethylendiamin, Dihexamethylentriamin, 1,6-Bis-(3-aminopropylamino)hexan, N-Methyldipropylentriamin oder Polyethylenimin erhältlich sind, worunter Diethylenglykol, Triethylenglykol , Di-, Tri- und Tetrapropylenglykol und niedermolekulare Pluronic®-Marken der BASF (z.B. Pluronic® PE 3100, PE 4300, PE 4400, RPE 1720, RPE 1740) bevorzugt sind.

Sofern vorhanden, liegt die Konzentration der vernetzbaren Verbindungen in der wässrigen Dispersion üblicherweise im Bereich von 10 bis 60 Gew.-% und insbesondere im Bereich von 15 bis 50 Gew.-%, bezogen auf das Gesamtgewicht der Zusammensetzung. Sofern die härtbare, wässrige Zusammensetzung einen der vorgenannten Alkohole enthält, liegt dessen Konzentration vorzugsweise im Bereich von 1 bis 50 Gew.-%, insbesondere im Bereich von 5 bis 40 Gew.-%. Die Gesamtmenge an vernetzbarer Verbindung und Alkohol macht üblicherweise 10 bis 60 Gew.-% und insbesondere 20 bis 50 Gew.-% des Gesamtgewichts der wässrigen Zusammensetzung aus.

In der Regel enthält die in Schritt a) eingesetzte wässrige Zusammensetzung wenigstens einen Katalysator K, welcher die Vernetzung der Verbindung V, bzw. ihres Umsetzungsprodukts oder Präkondensats bewirkt. In der Regel sind als Katalysatoren K Metallsalze aus der Gruppe der Metallhalogenide, Metallsulfate, Metallnitrate, Metallphosphate, Metalltetrafluoroborate; Bortrifluorid; Ammoniumsalze aus der Gruppe der Ammoniumhalogenide, Ammoniumsulfat, Ammoniumoxalat und Diammoniumphosphat; sowie organischen Carbonsäuren, organischen Sulfonsäuren, Borsäure, Phosphorsäure, Schwefelsäure und Salzsäure geeignet.

Beispiele für als Katalysatoren K geeignete Metallsalze sind insbesondere Magnesiumchlorid, Magnesiumsulfat, Zinkchlorid, Lithiumchlorid, Lithiumbromid, Aluminiumchlorid, Aluminiumsulfat, Zinknitrat und Natriumtetrafluoroborat.

Beispiele für als Katalysatoren K geeignete Ammoniumsalze sind insbesondere Ammoniumchlorid, Ammoniumsulfat, Ammoniumoxalat und Diammoniumphosphat.

Als Katalysatoren K sind insbesondere auch wasserlösliche organische Carbonsäuren wie Maleinsäure, Ameisensäure, Zitronensäure, Weinsäure und Oxalsäure, weiterhin Benzolsulfonsäuren, wie p-Toluolsulfonsäure, aber auch anorganische Säuren, wie Salzsäure, Phosphorsäure, Schwefelsäure, Borsäure und deren Gemische geeignet.

Vorzugsweise ist der Katalysator K unter Magnesiumchlorid, Zinkchlorid, Magnesiumsulfat, Aluminiumsulfat und deren Gemischen ausgewählt, wobei Magnesiumchlorid besonders bevorzugt ist.

Den Katalysator K wird man üblicherweise der wässrigen Dispersion erst kurz vor dem Imprägnieren in Schritt a) zusetzen. Er wird üblicherweise in einer Menge von 1 bis 20 Gew.-%, insbesondere 2 bis 10 Gew.-%, bezogen auf das Gesamtgewicht der in der wässrigen Zusammensetzung enthaltenen härtbaren Bestandteile eingesetzt. Die Konzentration des Katalysators, bezogen auf das Gesamtgewicht der wässrigen Dispersion, liegt üblicherweise im Bereich von 0,1 bis 10 Gew.-% und insbesondere im Bereich von 0,5 bis 5 Gew.-%.

Das Imprägnieren kann in an sich üblicher Weise erfolgen, z.B. durch Tauchen, durch Anwendung von Vakuum gegebenenfalls in Kombination mit Druck oder durch konventionelle Auftragungsverfahren wie Streichen, Besprühen und dergleichen. Das jeweils angewendete Imprägnierverfahren hängt naturgemäß von den Abmessungen des zu imprägnierenden Materials ab. Holzmaterialien mit geringen Abmessungen wie Späne oder Strands sowie dünne Furniere, d.h. Materialien mit einem großen Verhältnis von Oberfläche zu Volumen, lassen sich mit geringem Aufwand, z.B. durch Tauchen oder Besprühen imprägnieren, wohingegen Holzmaterialien mit größeren Abmessungen, insbesondere Materialien, deren geringste Ausdehnung mehr als 5 mm beträgt, z.B. Vollholz, Formteile aus Vollholz oder Holzwerkstoffe, unter Anwendung von Druck oder Vakuum, insbesondere durch kombinierte Anwendung von Druck und Vakuum imprägniert werden. Vorteilhafterweise wird das Imprägnieren bei einer Temperatur unterhalb 50°C, z.B. im Bereich von 15 bis 50°C durchgeführt.

Die Bedingungen des Imprägnierens werden in der Regel so gewählt, dass die aufgenommene Menge an härtbaren Bestandteilen der wässrigen Zusammensetzung wenigstens 1 Gew.-%, insbesondere wenigstens 5 Gew.-%, bezogen auf die Trockenmasse des unbehandelten Materials, beträgt. Die aufgenommene Menge an härtbaren Bestandteilen kann bis zu 100 Gew.-%, bezogen auf die Trockenmasse der unbehandelten Materialien betragen und liegt häufig im Bereich von 1 bis 60 Gew.-%, vorzugsweise im Bereich von 5 bis 50 Gew.-%, und insbesondere im Bereich von 10 bis 50 Gew.-%, bezogen auf die Trockenmasse des eingesetzten unbehandelten Materials. Die Feuchte der zum Imprägnieren eingesetzten, unbehandelten Materialien ist unkritisch und kann beispielsweise bis zu 100 % betragen. Hier und im Folgenden ist der Begriff "Feuchtigkeit" synonym mit dem Begriff Restfeuchtegehalt nach DIN 52183. Vorzugsweise liegt der Restfeuchtegehalt unterhalb des Fasersättigungspunkts des Holzes. Häufig liegt er im Bereich von 1 bis 50 % und insbesondere 5 bis 30 %.

Zum Tauchen wird das Holzmaterial, gegebenenfalls nach einer Vortrocknung, in einen Behälter, welcher die wässrige Zusammensetzung enthält, getaucht. Das Tauchen erfolgt vorzugsweise über einen Zeitraum von wenigen Sekunden bis 24 h, insbesondere von 1 min bis 6 h. Die Temperaturen liegen üblicherweise im Bereich von 15 °C bis 50 °C. Hierbei nimmt das Holzmaterial die wässrige Zusammensetzung auf, wobei durch die Konzentration an den nicht-wässrigen Bestandteilen (d. h. härtbaren Bestandteilen) in der wässrigen Zusammensetzung, durch die Temperatur und die Behandlungsdauer die von dem Holzmaterial aufgenommene Menge an diesen Bestandteilen gesteuert werden kann. Die tatsächlich aufgenommene Menge an Bestandteilen kann der Fachmann in einfacher Weise über die Gewichtszunahme des imprägnierten Materials und die Konzentration der Bestandteile in der wässrigen Zusammensetzung ermitteln und steuern. Furniere können beispielsweise mittels Pressrollen, so genannter Kalander, die sich in der wässrigen Imprägnierzusammensetzung befinden, vorgepresst werden. Das beim Entspannen im Holz auftretende Vakuum führt dann zu einer beschleunigten Aufnahme an wässriger Imprägnierzusammensetzung.

Das Imprägnieren erfolgt vorteilhafterweise durch kombinierte Anwendung von vermindertem und erhöhtem Druck. Hierzu wird das Holzmaterial, das in der Regel eine Feuchtigkeit im Bereich von 1 % bis 100 % aufweist, zunächst unter vermindertem Druck, der häufig im Bereich von 10 bis 500 mbar und insbesondere im Bereich von 40 bis 100 mbar liegt, mit der wässrigen Zusammensetzung in Kontakt gebracht, z. B. durch Tauchen in der wässrigen Zusammensetzung. Die Zeitdauer liegt üblicherweise im Bereich von 1 min bis 1 h. Hieran schließt sich eine Phase bei erhöhtem Druck, z. B. im Bereich von 2 bis 20 bar, insbesondere im Bereich von 4 bis 15 bar und speziell von 5 bis 12 bar, an. Die Dauer dieser Phase liegt üblicherweise im Bereich von 1 min bis 12 h. Die Temperaturen liegen üblicherweise im Bereich von 15 bis 50 °C. Hierbei nimmt das Holzmaterial die wässrige Zusammensetzung auf, wobei durch die Konzentration an den nicht-wässrigen Bestandteilen (d. h. härtbare Bestandteile) in der wässrigen Zusammensetzung, durch den Druck, durch die Temperatur und die Behandlungsdauer die von dem Holzmaterial aufgenommene Menge an diesen Bestandteilen gesteuert werden kann. Die tatsächlich aufgenommene Menge kann auch hier über die Gewichtszunahme des Holzmaterials berechnet werden.

Weiterhin kann das Imprägnieren durch konventionelle Verfahren zum Aufbringen von Flüssigkeiten auf Oberflächen erfolgen, z.B. durch Besprühen oder Rollen bzw. Streichen. Hierzu setzt man vorteilhafterweise ein Material mit einer Feuchtigkeit von nicht mehr als 50 %, insbesondere nicht mehr als 30 %, z.B. im Bereich von 12 % bis 30 % ein. Das Aufbringen erfolgt üblicherweise bei Temperaturen im Bereich von 15 bis 50 °C. Das Besprühen kann in üblicher Weise in allen für das Besprühen von flächigen oder feinteiligen Körpern geeigneten Vorrichtungen vorgenommen werden, z. B. mittels Düsenanordnungen und dergleichen. Beim Streichen bzw. Rollen wird die gewünschte Menge an wässriger Zusammensetzung mit Rollen oder Pinseln auf die flächigen Materialien aufgetragen.

Anschließend erfolgt in Schritt b) die Härtung der vernetzbaren Bestandteile der wässrigen Zusammensetzung. Die Härtung kann in Analogie zu den im Stand der Technik beschriebenen Verfahren durchgeführt werden, z.B. nach den in WO 2004/033170 und WO 2004/033171 beschriebenen Verfahren.

Die Härtung erfolgt typischerweise durch Behandeln des imprägnierten Materials bei Temperaturen oberhalb 80°C, insbesondere oberhalb 90 °C, z.B. im Bereich von 90 bis 220 °C und insbesondere im Bereich von 100 bis 200 °C. Die für das Härten erforderliche Zeit liegt typischerweise im Bereich von 10 min bis 72 Stunden. Bei Furnieren und feinteiligen Holzmaterialien können eher höhere Temperaturen und kürzere Zeiten angewendet werden. Bei der Härtung werden nicht nur die Poren im Holz mit dem gehärteten Imprägniermittel angefüllt, sondern es entsteht eine Quervernetzung zwischen Imprägniermittel und dem Holz selbst.

Gegebenfalls kann man vor dem Härten einen Trocknungsschritt, im Folgenden auch Vortrocknungsschritt, durchführen. Hierbei werden die flüchtigen Bestandteile der wässrigen Zusammensetzung, insbesondere das Wasser und überschüssige organische Lösungsmittel, die in der Härtung/Vernetzung der Harnstoffverbindungen nicht reagieren, teilweise oder vollständig entfernt. Vortrocknung bedeutet, dass das Holz oder der Holzwerkstoff unter den Fasersättigungspunkt getrocknet wird, der je nach Art des Holzes bei etwa 30 Gew.-% liegt. Diese Vortrocknung wirkt der Gefahr einer Rissbildung entgegen. Bei kleinformatigen Holzkörpern, beispielsweise Furnieren, kann die Vortrocknung entfallen. Bei Holzkörpern mit größeren Abmessungen ist die Vortrocknung jedoch von Vorteil. Sofern eine separate Vortrocknung durchgeführt wird, erfolgt diese vorteilhafterweise bei Temperaturen im Bereich von 20 bis 80 °C. In Abhängigkeit von der gewählten Trocknungstemperatur kann eine teilweise oder vollständige Härtung/Vernetzung der in der Zusammensetzung enthaltenen härtbaren Bestandteile erfolgen. Die kombinierte Vortrocknung/Härtung der imprägnierten Materialien erfolgt üblicherweise durch Anlegen eines Temperaturprofils, das von 50 °C bis 220 °C, insbesondere von 80 bis 200 °C reichen kann.

Die Härtung/Trocknung kann in einem konventionellen Frischluft-Abluft System, z. B. einem Trommeltrockner durchgeführt werden. Vorzugsweise erfolgt die Vortrocknung in einer Weise, dass der Feuchtegehalt des Holzes oder Holzwerkstoffs nach der Vortrocknung nicht mehr als 30 %, insbesondere nicht mehr als 20 %, bezogen auf die Trockenmasse, beträgt. Es kann von Vorteil sein, die Trocknung/Härtung bis zu einem Feuchtegehalt < 10 % und insbesondere < 5 %, bezogen auf die Trockenmasse, zu führen. Der Feuchtegehalt kann durch die Temperatur, die Dauer und den bei der Vortrocknung gewählten Druck in einfacher Weise gesteuert werden.

Gegebenenfalls wird man vor dem Trocknen/Härten anhaftende Flüssigkeit auf mechanischem Wege entfernen.

Bei großformatigen Materialien hat es sich bewährt, diese beim Trocknen/Härten zu fixieren, z.B. in Heizpressen.

Die in Schritt a) imprägnierten Holzmaterialien können, wenn es sich nicht bereits um konfektionierte Endprodukte handelt, in an sich bekannter Weise weiterverarbeitet werden, im Falle feinteiliger Materialen z.B. zu Formkörpern wie OSB-Platten (oriented structural board), Spanplatten, Wafer-Boards, OSL-Platten und OSL-Formteile (Oriented-Strand-Lumber), PSL-Platten und PSL-Formteile (Parallel-Strand-Lumber). Dämmplatten und mitteldichten (MDF) und hochdichten (HDF) Faserplatten und dergleichen, im Falle von Furnieren zu Furnierwerkstoffen wie furnierte Faserplatten, furnierte Tischlerplatten, furnierte Spanplatten einschließlich furnierte OSL- und PSL-Platten (oriented bzw. parallel strand lumber), Sperrholz, Leimholz, Lagenholz, Furnierschichtholz (z. B. Kerto-Schichtholz), Multiplex-Platten, laminierte Furnierwerkstoffe (Laminated Veneer Lumber LVL), dekorative Furnierwerkstoffe wie Verkleidungs-, Decken- und Fertigparkett-Paneele aber auch nichtflächige, 3-dimensional geformte Bauteile wie Lagenholzformteile, Sperrholzformteile und andere beliebige, mit wenigstens einer Furnierlage beschichtete Formteile. Die Weiterverarbeitung kann unmittelbar im Anschluss an das Imprägnieren in Schritt a), während oder im Anschluss an das Härten in Schritt b) erfolgen. Im Falle von imprägnierten Furnieren wird man vorteilhafterweise die Weiterverarbeitung vor dem Härtungsschritt oder zusammen mit dem Härtungsschritt durchführen. Bei Formkörpern aus feinteiligen Materialien werden der Formgebungsschritt und der Härtungsschritt gleichzeitig durchgeführt.

Sofern es sich bei dem imprägnierten Holzmaterial um Vollholz oder einen konfektionierten Holzwerkstoff handelt, kann dieser vor dem Behandeln in Schritt c) in üblicher Weise bearbeitet werden, z.B. durch Sägen, Hobeln, Schleifen etc. Erfindungsgemäß imprägniertes und gehärtetes Vollholz eignet sich insbesondere zur Herstellung von Gegenständen, die Feuchtigkeit und insbesondere Witterungseinflüssen ausgesetzt sind, z.B. für Bauholz, Balken, Bauelemente aus Holz, für Holzbalkone, Dachschindeln, Zäune, Holzmasten, Bahnschwellen, im Schiffsbau für den Innenausbau oder für Decksaufbauten,

In Schritt c) des erfindungsgemäßen Verfahrens wird wenigstens eine Oberfläche des in Schritt b) erhaltenen Holzes bzw. Holzwerkstoffs mit einem Oberflächenbehandlungsmittel behandelt.

Der Begriff Oberflächenbehandlungsmittel umfasst grundsätzlich alle chemischen Zusammensetzungen, die zur Oberflächenbehandlung, insbesondere von Holz oder Holzwerkstoffen, eingesetzt werden, d.h. nicht polymergebundene Farbmittel-Zubereitungen wie Beizen sowie polymergebundene Beschichtungssysteme wie Lacke einschließlich Klarlacke, Glanzlacke, Seidenglanzlacke, Mattlacke, Buntlacke, Pulverlacke weiterhin Topcoats, Lasuren sowie Primer und Grundierungen, aber auch Folien.

Der Begriff "Trocknen des Oberflächenbehandlungsmittels" umfasst hier und im Folgenden sowohl ein physikalisches Trocknen durch Entfernen flüchtiger Bestandteile aus Beschichtungen, die durch Oberflächenbehandlung mit lösungsmittelhaltigen bzw. wasserbasierten Beschichtungsmitteln erhalten wurden, als auch das Härten/Vernetzen bei härtbaren Oberflächenbehandlungsmitteln.

Die Oberflächenbehandlungsmittel können grundsätzlich fest, halbfest, z.B. pastös oder insbesondere flüssig sein. Flüssige Oberflächenbehandlungsmittel können sowohl lösungsmittelbasiert als auch wasserbasiert sein. Lösungsmittelbasiert heißt in diesem Zusammenhang, dass die flüssigen Bestandteile des Oberflächenbehandlungsmittels im Wesentlichen, d.h. zu wenigstens 60 Gew.-%, bezogen auf die flüssigen Bestandteile, organische Lösungsmittel, einschließlich Reaktiwerdünner, umfassen. Wasserbasiert heißt in diesem Zusammenhang, dass die flüssigen Bestandteile des Oberflächenbehandlungsmittels im Wesentlichen, d.h. zu wenigstens 60 Gew.-%, insbesondere zu wenigstens 80 Gew.-% bezogen auf die flüssigen Bestandteile, Wasser umfassen.

Die polymergebundenen Oberflächenbehandlungsmittel enthalten typischerweise wenigstens ein polymeres Bindemittel oder ein Präpolymer, wobei letzteres unter Einwirkung von UV-Strahlung und/oder Wärme zu einem polymeren Bindemittel aushärtet.

Die polymeren Bindemittel können ihrerseits
- physikalisch trocknende Bindemittel sein, d.h. beim Trocknen bildet sich ein Polymerfilm aus, ohne dass eine nennenswerte Vernetzung der Polymerketten untereinander eintritt,
- selbstvernetzende Bindemittel sein, d.h. die Polymerketten des Bindemittels weisen funktionelle Gruppen auf, die beim Trocknen der Beschichtung, gegebenenfalls durch Einwirkung von UV-Strahlung, miteinander oder mit einer Vernetzersubstanz unter Bindungsbildung, d.h. Vernetzung, reagieren,
- UV-vernetzbare Bindemittel oder thermisch härtende Bindemittel sein, d.h. die Polymerketten bzw. die Präpolymeren des Bindemittels weisen funktionelle Gruppen auf, die mit einer Vernetzersubstanz unter Anwendung von erhöhter Temperatur und/oder UV-Strahlung unter Bindungsbildung reagieren und so eine Vernetzung des Polymers bewirken. Bindemittel, die unter kombinierter Anwendung von UV-Licht und Wärme vernetzen, werden auch als Dual-Cure Systeme bezeichnet.

Eine Übersicht über Oberflächenbehandlungsmittel für Holz findet man in "Wood - Surface Treatment" in Ullmanns Encyclopedia of Industrial Chemistry, 5th ed. on CD-ROM, Wiley-VCH - Weinheim 1997

Gemäß einer ersten Ausführungsform der Erfindung umfasst das in Schritt c) eingesetzte Oberflächenbehandlungsmittel als Bindemittel ein durch Wärme oder UV-Strahlung vernetzbares Polymer und/oder Präpolymer.

Polymere bzw. Präpolymere, die sich durch UV-Strahlung vernetzen lassen, weisen typischerweise ethylenisch ungesättigte Doppelbindungen auf, die sich unter Einwirkung elektromagnetischer Strahlung, wie UV- oder Elektronenstrahlung, radikalisch polymerisieren lassen. In der Regel wird der Gehalt ethylenisch ungesättigter Doppelbindungen in dem Polymer bzw. Präpolymer im Bereich von 0,01 bis 1,0 mol/100 g, häufig im Bereich von 0,05 bis 0,8 mol/100 g und ganz besonders bevorzugt von 0,1 bis 0,6 mol/100 g Polymer/Präpolymer, liegen. Präpolymere weisen vorzugsweise ein zahlenmittleres Molekulargewicht Mn von 500 bis 5000 g/mol auf, wohingegen das Molekulargewicht von Polymeren in der Regel bis 100000 g/mol betragen kann.

In einer Ausgestaltung dieser Ausführungsform liegen die ethylenisch ungesättigten Doppelbindungen in Form von Gruppen der Formel A vor

A-X-CR¹=CH₂ A

worin A für O oder NR² oder eine chemische Bindung steht, wobei R² für Wasserstoff oder C₁-C₄-Alkyl steht, X für eine chemische Bindung, eine Carbonylgruppe oder eine CH₂-Gruppe steht, und R¹ für Wasserstoff oder C₁-C₄-Alkyl steht. Insbesondere liegen die Doppelbindungen in Form einer Acrylat-Gruppe oder einer Methacrylat-Gruppe vor, d.h. X steht für eine Carbonylgruppe, A steht insbesondere für Sauerstoff und R¹ bedeutet insbesondere Wasserstoff oder Methyl.

In einer anderen Ausgestaltung dieser Ausführungsform ist die Doppelbindung Bestandteil einer langkettigen Alkylgruppe.

In einer dritten Ausgestaltung dieser Ausführungsform ist die Doppelbindung Bestandteil des Polymerrückgrats.

In einer besonders bevorzugten Ausführungsform der Erfindung umfasst das Bindemittel ein UV-härtbares Polymer oder Präpolymer, worin die Doppelbindungen in Form von Doppelbindungen der Formel A und insbesondere als Acrylat- und/oder Methacrylatgruppen vorliegen. Gegebenenfalls umfasst das Bindemittel zusätzlich einen oder mehrere Reaktiwerdünner. Das UV-härtbare (Prä)polymer weist typischerweise ein zahlenmittleres Molekulargewicht im Bereich von 500 bis 50000 Dalton auf.

Derartige (Prä)polymere sind dem Fachmann bekannt, z.B. aus P.K.T. Oldring (Herausgeber), Chemistry and Technology of UV- and EB-Formulations for Coatings and Paints, Vol. II, SITA Technology, London, 1991, S. 37 bis 206 sowie aus der darin zitierten Literatur und im Handel erhältlich. In Abhängigkeit von der Struktur des (Prä)polymers handelt es sich bei den Acrylat- bzw. Methacrylat-Gruppen tragenden (Prä)polymeren beispielsweise um Polyether(meth)acrylate, Polyester(meth)acrylate, Urethan(meth)acrylate, Silicon(meth)acrylate, Epoxy(meth)acrylate, Melamin-(meth)acrylate, (Meth)acrylat-modifizierte Polyurethane und (Meth)acrylat-modifizierte Copolymerisate auf der Basis von (Meth)acrylsäureestern. Hierunter sind insbesondere aliphatische und aromatische Urethan(meth)acrylate und deren Mischungen mit Reaktiwerdünnern bevorzugt.

Reaktivverdünner sind niedermolekulare, flüssige Verbindungen, die wenigstens eine, polymerisierbare, ethylenisch ungesättigte Doppelbindung aufweisen. Eine Übersicht über Reaktivverdünner findet man z. B. in J. P. Fouassier (Hrsg.), Radiation Curing in Polymer Science and Technology, Elsevier Science Publisher Ltd., 1993, Vol. 1, S. 237-240. Bevorzugt werden Reaktivverdünner auf Basis von Estern der Acrylsäure bzw. der Methacrylsäure mit aliphatischen Di- oder Polyolen, wobei wenigstens zwei der OH-Gruppen der Di- oder Polyole mit Acrylsäure bzw. Methacrylsäure verestert sind. Geeignete aliphatische Di- oder Polyole weisen in der Regel 2 bis 20 Kohlenstoffatome auf und können ein lineares, verzweigtes oder cyclisches Kohlenstoffgerüst haben. Sie enthalten vorzugsweise keine funktionellen Gruppen. Abgesehen von ein oder zwei Ethersauerstoffen weisen sie vorzugsweise keine Heteroatome auf. Beispiele für derartige Reaktivverdünner sind Butandioldiacrylat, Hexandioldiacrylat, Octandioldiacrylat, Dekandioldiacrylat, Cyclohexandioldiacrylat, Trimethylolpropantriacrylat, Pentaerythrittetraacrylat, Dipentaerythrit-penta/hexaacrylat, Dipropylenglykoldiacrylat sowie die entsprechenden Ester der Methacrylsäure und die unter den Laromer^{®}-Marken der BASF AG verkauften Produkte LR 8887, PO 33F, LR 8967 und LR 8982. Geeignete Reaktivverdünner sind auch (Meth)Acrylsäure und deren C₁-C₁₀-Alkylester, Maleinsäure und deren C₁-C₁₀-Alkylester bzw. Halbester, Vinylacetat, Vinylether, Divinylharnstoffe, Polyethylenglykol-di(meth)acrylat, Vinyl(meth)acrylat, Allyl(meth)acrylat, Styrol, Vinyltoluol, Divinylbenzol, Tris(acryloyloxymethyl)isocyanurat, Ethoxyethoxyethyl-acrylat, N-Vinylpyrrolidon, Phenoxyethylacrylat, Dimethylamino-ethylacrylat, Hydroxyethyl-(meth)acrylat, Butoxyethylacrylat, Isobornyl(meth)acrylat, Dimethylacrylamid und Dicyclopentylacrylat, sowie die in der EP 0 250 631 A1 beschriebenen, langkettigen linearen Diacrylate mit einem Molekulargewicht von 400 bis 4.000, bevorzugt von 600 bis 2.500 Dalton. Einsetzbar ist außerdem das Umsetzungsprodukt von 2 Molen Acrylsäure mit einem Mol eines Dimerfettalkohols, der im Allgemeinen 36 Kohlenstoffatome aufweist. Geeignet sind auch Gemische der genannten Monomere.

Gemäß einer weiteren Ausgestaltung dieser Ausführungsform umfasst das Oberflächenbehandlungsmittel als Bindemittel wenigstens einen ungesättigten Polyester. Hierunter versteht man Polyester, welche durch Kondensation von ethylenisch ungesättigten Di- oder Polycarbonsäuren wie Maleinsäure, Fumarsäure und dergleichen, oder deren esterbildenden Derivaten mit Di- oder Polyolen, gegebenenfalls in Kombination mit anderen Di- oder Polycarbonsäuren erhalten werden. Ethylenisch ungesättigte Polyester sind dem Fachmann ebenfalls bekannt, z.B. aus UV- and EB-Formulations for Coatings and Paints, Vol. II, SITA Technology, London, 1991, S. 211 bis 219, sowie aus der darin zitierten Literatur und im Handel erhältlich. Hierzu zählen insbesondere die Kondensationsprodukte von Maleinsäure bzw. Maleinsäureanhydrid mit Diolen wie Ethylenglykol, 1,2-Propylenglykol, 1,4-Butandiol, 1,5-Pentandiol, Neopentylglykol und 1,6-Hexandiol, insbesondere 1,2-Propylenglykol und die Cokondensationsprodukte von Maleinsäure bzw. Maleinsäureanhydrid mit Dicarbonsäuren bzw. deren Anhydriden wie Bernsteinsäure, Bernsteinsäureanhydrid, Glutarsäure, Glutarsäureanhydrid, Adipinsäure, Phthalsäure, Terephthalsäure, Isophthalsäure und insbesondere Phthalsäureanhydrid und den vorgenannten Diolen.

Die UV-härtbaren Beschichtungsmittel enthalten in der Regel 0,01 bis 5 Gew.-%, bevorzugt 0,1 bis 2 Gew.-%, insbesondere 0,2 bis 1 Gew.-% wenigstens eines Photoinitiators, der die Polymerisation ethylenisch ungesättigter Doppelbindungen initiieren kann. Hierzu zählen Benzophenon und Benzophenonderivate, wie 4-Phenylbenzophenon und 4-Chlorobenzophenon, Michlers Keton, Anthron, Acetophenonderivate, wie 1-Benzoylcyclohexan-1-ol, 2-Hydroxy-2,2-dimethylacetophenon und 2,2-Di-methoxy-2-phenylacetophenon, Benzoin und Benzoinether, wie Methyl-, Ethyl- und Butylbenzoinether, Benzilketale, wie Benzildimethylketal, 2-Methyl-1-(4-methyl-thiophenyl)-2-morpholinopropan-1-on, Anthrachinon und seine Derivate, wie ß-Methylanthrachinon und tert.-Butylanthrachinon, Acylphosphinoxide, wie 2,4,6-Trimethylbenzoyldiphenylphosphinoxid, Ethyl-2,4,6-trimethylbenzoylphenylphosphinat und Bisacylphosphinoxide. Derartige Initiatoren sind beispielsweise die im Handel unter den Marken Irgacure^{®} 184, Darocure^{®} 1173 der Firma Ciba Geigy, Genocure^{®} der Firma Rahn oder Lucirin^{®} TPO der Firma BASF AG erhältlichen Produkte.

Die UV-härtbaren Oberflächenbehandlungsmittel können sowohl nichtwässrig als auch wässrig ausgestaltet sein. Im Falle nichtwässriger Ausgestaltungen enthalten sie typischerweise ein oder mehrere organische Lösungsmittel und/oder einen oder mehrere Reaktivverdünner zur Einstellung einer geeigneten Verarbeitungsviskosität. Im Falle wässriger Formulierungen liegen die UV-härtbaren Bindemittel(prä)polymere in Form einer wässrigen Dispersion vor. Je nach Verwendungszweck und Ausgestaltung können die UV-härtbaren Oberflächenbehandlungsmittel bis zu 35 Gew.-% übliche Hilfsmittel, wie Verdicker, Verlaufshilfsmittel, Entschäumer, UV-Stabilisatoren, Gleitmittel und Füllstoffe enthalten. Geeignete Hilfsmittel sind dem Fachmann hinreichend aus der Lack-Beschichtungs-Technologie bekannt. Geeignete Füllstoffe umfassen Silikate, z.B. durch Hydrolyse von Siliciumtetrachlorid erhältliche Silikate, wie AerosilR der Fa. Degussa, Kieselerde, Talkum, Aluminiumsilikate, Magnesiumsilikate, Calciumcarbonate etc. Geeignete Stabilisatoren umfassen typische UV-Absorber, wie Oxanilide, Triazine und Benzotriazol (letztere erhältlich als Tinuvin®-Marken der Ciba-Spezialitätenchemie) und Benzophenone. Diese können alleine oder zusammen mit geeigneten Radikalfängern, beispielsweise sterisch gehinderten Aminen, wie 2,2,6,6,-Tetramethyl-piperidin, 2,6-Di-tert.-butylpiperidin oder deren Derivate, z. B. Bis-(2,2,6,6-tetramethyl-4-piperidyl)sebacinat eingesetzt werden. Stabilisatoren werden üblicherweise in Mengen von 0,1 bis 5,0 Gew.-% und vorzugsweise von 0,5 bis 3,5 Gew.-%, bezogen auf das Beschichtungsmittel, eingesetzt.

Gemäß einer weiteren Ausführungsform der Erfindung handelt es sich bei dem Oberflächenbehandlungsmittel um ein polymergebundenes Oberflächenbehandlungsmittel, das als Bindemittel ein sogenanntes thermisch härtendes Polymer oder Präpolymer umfasst. Derartige thermisch härtenden Systeme enthalten in der Regel wenigstens ein reaktives Polymer, das reaktive Gruppen wie Isocyanat-Gruppen, die gegebenenfalls reversibel blockiert sind, Epoxidgruppen, insbesondere in Form von Glycidylgruppen, alkoholische OH-Gruppen, primäre und sekundäre Aminogruppen, Carboxylgruppen, Anhydridgruppen, Säurechlorid-Gruppen, Carbonylgruppen wie Aldehyd- oder Ketogruppen, N-Hydroxymethylgruppen und dergleichen aufweist, sowie wenigstens einen Vernetzer, der wenigstens zwei zu den reaktiven Gruppen des Polymers komplementäre reaktive Gruppen aufweist. Beispiele für Paare reaktiver Gruppen mit zueinander komplementärer Reaktivität sind Isocyanat/Hydroxyl, Isocyanat/Amino, Anhydrid/Hydroxyl, Anhydrid/Amino, Carbonyl/Amino, Carbonyl, Hydrazid oder Semicarbazid, Aldehyd/Harnstoff, Carbonsäurechlorid/Hydroxyl, Glycidyl/Hydroxyl, Glycidyl/Amino, Hydroxyl/N-Hydroxymethyl, Glycidyl/Carboxyl, Aziridin/Carboxyl, Hydroxyl/Carbodiimid, Aziridin/Hydroxyl, etc. Insbesondere handelt es sich bei dem reaktiven Polymer um ein Hydroxylgruppen aufweisendes Harz, z.B. ein Hydroxylgruppen tragendes Polyurethan, ein hydroxylgruppen tragendes Polymer auf Basis von Alkyl(Meth)acrylaten (Acrylat-Harz, siehe Römpp-Lexikon, Lacke und Druckfarben, Georg-Thieme-Verlag, Stuttgart, 1998, S. 11f.), und bei dem Vernetzer um einen Isocyanat-Gruppen aufweisenden Vernetzer, z.B. ein Polyisocyanat mit 2 bis 4 IsocyanatGruppen, z.B. ein Allophanat, Biuret oder Cyanurat eines aliphatischen oder aromatischen Diisocyanats. Geeignet sind auch Kombinationen von Hydroxylgruppen tragenden Harzen, insbesondere Acrylat-Harzen mit N-Hydroxymethyl-Gruppen tragenden Vernetzern wie Melamin-Formaldehyd-Harzen. 2-K-Lacke sind in der Regel Lösungsmittel-basiert, können aber auch als Wasserlacke mit einem geringen Anteil an organischen Lösungsmitteln, in der Regel bis 25 Gew.-%, insbesondere bis 10 Gew.-%, formuliert werden. Je nach Ausgestaltung können Oberflächenbehandlungsmittel, die als Bindemittel ein sogenanntes 2-K-System umfassen, übliche Hilfsmittel, wie Verdicker, Verlaufshilfsmittel, Entschäumer, UV-Stabilisatoren, Gleitmittel und Füllstoffe in den hierfür typischen Mengen enthalten. Häufig enthalten sie einen Katalysator, welcher die Vernetzungsreaktion fördert, z.B. eine Säure oder, im Falle Isocyanat-basierter Systeme, zinnorganische Verbindungen.

Zu den thermisch härtenden Systemen gehören auch solche Harze, in denen das zu härtende Polymer oder Präpolymer innerhalb einer Polymerkette zueinander komplementäre reaktive Gruppen trägt.

Zu den thermisch härtenden Systemen zählen weiterhin auch die vorgenannten Polymere und Präpolymere, die ethylenisch ungesättigte Doppelbindungen aufweisen. In diesem Fall enthalten die Beschichtungsmittel anstelle der UV-Initiatoren einen Polymerisationsinitiator, der bei Einwirkung erhöhter Temperatur eine Polymerisation dieser Gruppen und damit eine radikalische Vernetzung bewirkt.

Gemäß einer weiteren Ausführungsform der Erfindung handelt es sich bei dem Oberflächenbehandlungsmittel um einen Nitrolack oder einen Nitrokombilack (Acrylat-Harz, siehe Römpp-Lexikon, Lacke und Druckfarben, Georg-Thieme-Verlag, Stuttgart, 1998, S. 11f.). Hierunter versteht man lösungsmittelbasierte, polymergebundene, physikalisch trocknende Oberflächenbehandlungsmittel, die als Bindemittel Nitrocellulose, gegebenenfalls in Kombination mit einem oder mehreren synthetischen Hartharzen und gegebenenfalls Weichmachern in einem organischen Lösungsmittel oder Lösungsmittelgemisch enthalten. Typische Weichmacher umfassen Dialkyladipate, Dialkylphthalate, Weichharze wie Alkydharze und dergleichen. Geeignete synthetische Harze umfassen insbesondere die vorgenannten Acrylat-Harze und Ketonharze. Typische Lösungsmittel für Nitro(kombinations)lacke sind aromatische Lösungsmittel wie Xylole, Ester aliphatischer Carbonsäuren mit C₂-C₁₀-Alkanolen, insbesondere Ester der Essigsäure wie Ethyl-, Propyl-, Butyl- oder Amylacetat, Ether wie Dipropylenglykol, Dibutylglykol, C₁-C₁₀-Alkanole wie Methanol, Ethanol, Propanol, Butanol und dergleichen, insbesondere Kombinationen von hochsiedenden Lösungsmitteln mit niedrig siedenden Lösungsmitteln und gegebenenfalls in einem mittleren Temperaturbereich siedenden Lösungsmitteln. Derartige Lacke können die hierfür üblichen Zusatzstoffe, Hilfsmittel und Füllstoffe, z.B. Mattierungsmittel und dergleichen enthalten.

Gemäß einer weiteren Ausführungsform der Erfindung handelt es sich bei dem Oberflächenbehandlungsmittel um ein Beschichtungsmittel, dessen Bindemittel wenigstens ein Alkydharz umfasst. Derartige Oberflächenbehandlungsmittel werden auch als Alkyd-Lacke oder Alkydharz-Lacke bezeichnet und können sowohl lösungsmittelbasiert als auch wasserbasiert sein. Geeignete Alkydharze und Lacke auf Basis von Alkydharzen sind dem Fachmann bekannt (siehe Römpp-Lexikon, Lacke und Druckfarben, Georg-Thieme-Verlag, Stuttgart, 1998, S. 20-22 sowie F.N. Jones, "Alkyd-Resins" in Ullmanns Encyclopedia of Industrial Chemistry, 5th ed. on CD-ROM, Wiley-VCH - Weinheim 1997). Bei den Alkydharzen handelt es sich bekanntermaßen um Polykondensationsprodukte von Polyolen, die wenigstens 3 und häufig 3 oder 4 OH-Gruppen aufweisen, wie Glycerin, Pentaerythrit, Trimethylolpropan, Trimethylolethan und dergleichen, mit mehrwertigen Carbonsäuren oder mit deren Anhydriden wie Phthalsäure, deren Anhydrid, Isophthalsäure, Trimellitsäure, deren Anhydrid, Maleinsäure, deren Anhydrid, Azelainsäure, Adipinsäure, Sebacinsäure und dergleichen, wobei ein Teil der OH-Gruppen mit einer Fettsäure verestert sein können, wobei die Fettsäure typischerweise bei der Herstellung in Form eines Öls oder Fettes, also eines Triglycerids, eingesetzt wird und dementsprechend auch als Ölkomponente bezeichnet wird. Beispiele für Ölkomponenten sind trocknende Öle wie Leinöl, Oiticicaöl und Holzöl, halbtrocknende Öle wie Soja-Öl, Ricinenöl, Tallöl, Safloröl, und nicht-trocknende Öle wie Rizinus-Öl und Kokosöl. Bei dem Fettsäurebestandteil kann es sich auch um eine Kochsche Säure handeln, die als Versatic® bezeichnet werden. Entsprechende Alkydharze sind unter der Bezeichnung Cardura-Harze erhältlich. In Alkydharz-basierten Beschichtungsmitteln können die Alkydharze mit anderen Komponenten wie Ölen, Naturharzen, PhenolHarzen, Melamin-Harzen, Harnstoff-Harzen, Acrylat-Harzen, Epoxidharzen, Silikonharzen, Isocyanaten und Polyurethanen modifiziert sein (modifizierte Alkydharze). Je nach Art der Fettsäurekomponente und der Modifizierungsbestandteile können Alkydharze in bekannter Weise als physikalisch trocknende Beschichtungsmittel und als vernetzende Beschichtungsmittel (luft- oder ofentrocknend) ausgestaltet werden.

In bevorzugten Ausführungsformen der Erfindung wird ein Oberflächenbehandlungsmittel verwendet, das unter Wasser-basierten Oberflächenbehandlungsmitteln ausgewählt ist. Im Unterschied zu Lösungsmittel-basierten Oberflächenbehandlungsmitteln weisen die wasserbasierten Oberflächenbehandlungsmittel als Lösungs- bzw. Verdünnungsmittel im Wesentlichen Wasser und nur geringe Mengen an organischen Lösungsmitteln, in der Regel nicht mehr als 20 Gew.-% und insbesondere nicht mehr als 10 Gew.-%, bezogen auf das Gesamtgewicht des Oberflächenbehandlungsmittels auf.

Eine bevorzugte Ausführungsform betrifft polymergebundene, wasserbasierte Oberflächenbehandlungsmittel. Derartige Oberflächenbehandlungsmitteln umfassen wenigstens ein polymeres Bindemittel in Form einer wässrigen Polymerdispersion. Bei den Polymeren der wässrigen Polymerdispersion kann es sich um Primärdispersionen handeln, d.h. Polymerdispersionen, die durch radikalische wässrige Emulsionspolymerisation hergestellt wurden, als auch um Sekundärdispersionen, d.h. Polymerdispersionen, in welchen das dispergierte Polymer zunächst durch Polymerisation in einem organischen Lösungsmittel hergestellt wurde und anschließend das organische Lösungsmittel durch Wasser ersetzt wurde. Die wässrigen Polymerdispersionen können, wie zuvor beschrieben, physikalisch trocknende Dispersionen, selbstvernetzende Dispersionen, UV-härtbare Dispersionen, thermisch härtende Dispersionen, durch Zugabe eines Vernetzers vernetzbare Dispersionen (2-K-Dispersionen) oder Dual-Cure-Systeme sein.

Gemäß einer ersten Ausführungsform polymergebundener, wasserbasierter Oberflächenbehandlungsmittel handelt es sich um solche, die eine physikalisch trocknende Polymerdispersion als Bindemittel enthalten. Derartige Dispersionen sind dem Fachmann hinlänglich bekannt, z.B. aus D. Distler, "Wässrige Polymerdispersionen", Wiley-VCH Weinheim 1999, Kapitel 6.5, aus M. Schwartz, R. Baumstark, Waterbased Acrylates for Decorative Coatings" Curt R. Vincentz-Verlag Hannover 2001, S. 191-212 und darin zitierte Literatur sowie aus EP-A 184091, EP-A 376096, EP-A 379892, EP-A 522789, EP-A 609793, EP-A 439207, EP-A 609756, EP-A 623659, EP 710680, WO 95/16720, DE 1220613, DE-A 3418524, US 3,454,516, US 5,263,193, US 5,185,387 und US 5,021,469.

Bei den physikalisch trocknenden Dispersionen handelt es sich um wässrige, durch Emulsionspolymerisation ethylenisch ungesättigter Monomere erhältliche Polymerdispersionen, die typischerweise wenigstens 80 Gew.-%, z.B. 80 bis 100 Gew.-% und speziell 90 bis 99 Gew.-%, bezogen auf die Gesamtmonomermenge, wenigstens eines monoethylenisch ungesättigten Monomers mit einer begrenzten Wasserlöslichkeit von in der Regel ≤ 30 g/l bei 25°C einpolymerisiert enthalten (Monomer M1). Beispiele für Monomere (M1) sind Vinylaromaten wie Styrol, Vinylester aliphatischer Carbonsäuren wie Vinylacetat, Vinylpropionat und dergleichen, Ester monoethylenisch ungesättigter C₃-C₆-Mono- und C₄-C₆-Dicarbonsäuren mit C₁-C₁₀-Alkanolen, insbesondere die Ester der Acrylsäure und der Methacrylsäure mit C₁-C₁₀-Alkanolen wie Ethylacrylat, n-Propylacrylat, n-Butylacrylat, tert.-Butylacrylat, n-Hexylacrylat, n-Octylacrylat, 2-Ethylhexylacrylat, Methylmethacrylat, Ethylmethacrylat, n-Butylmethacrylat, n-Hexylmethacrylat, 2-Ethylhexylmethacrylat, weiterhin Butadien und C₂-C₆-Olefine wie Ethylen oder Propen. Hierunter bevorzugt sind solche Polymerdispersionen, in denen Polymere als Monomer M1 C₁-C₁₀-Alkylacrylate und/oder C₁-C₁₀-Alkylmethacrylate, gegebenenfalls in Kombination mit Vinylaromaten wie Styrol, einpolymerisiert enthalten.

Daneben können die das Polymerisat der wässrigen Polymerdispersion konstituierenden Monomere bis zu 20 Gew.-%, z.B. 0,1 bis 20 Gew.-% und insbesondere 1 bis 10 Gew.-% von den Monomeren M1 verschiedene Monomere einpolymerisiert enthalten.

Hierzu zählen monoethylenisch ungesättigte Säuren (Monomere M2) mit in der Regel 2 bis 10 C-Atomen, z.B. Mono- und Dicarbonsäuren wie Acrylsäure, Methacrylsäure, Fumarsäure, Itaconsäure, Sulfonsäuren wie Vinylsulfonsäure, 2-Acrylamido-2-methyl-propansulfonsäure, und dergleichen, neutrale monoethylenisch ungesättigte Monomere mit erhöhter Wasserlöslichkeit von in der Regel wenigstens 50 g/l und insbesondere wenigstens 80 g/l bei 25°C (Monomere M3) wie die Amide der vorgenannten monoethylenisch ungesättigten Carbonsäuren, z.B. Acrylamid, Methacrylamid, Hydroxy-C₂-C₄-alkylester der vorgenannten monoethylenisch ungesättigten Monocarbonsäuren, z.B. 2-Hydroxyethylacrylat, 2- und 3-Hydroxypropylacrylat, 4-Hydroxybutylacrylat, 2-Hydroxyethylmethacrylat, 2- und 3-Hydroxypropylmethacrylat, 4-Hydroxybutylmethacrylat und monoethylenisch ungesättigten Monomeren mit Oligoalkylenoxid-Ketten vorzugsweise mit Polyethylenoxidketten mit Oligomerisierungsgraden vorzugsweise im Bereich von 2 bis 200, z.B. Monovinyl- und Monoallylether von Oligoethylenglykolen sowie Ester der Acrylsäure, der Maleinsäure oder der Methacrylsäure mit Oligoethylenglykolen. Zu den Monomeren M3 zählen insbesondere auch monoethylenisch ungesättigte, Harnstoffgruppen tragende Monomere wie N-Vinyl- und N-Allylharnstoff sowie Derivate des Imidazolidin-2-ons, z.B. N-Vinyl- und N-Allylimidazolidin-2-on, N-Vinyloxyethylimidazolidin-2-on, N-Allyloxyethylimidazolidin-2-on, N-(2-Acrylamidoethyl)imidazolidin-2-on, N-(2-Acryloxyethyl)imidazolidin-2-on, N-(2-Methacrylamidoethyl)imidazolidin-2-on, N-(2-Methacryloxyethyl)imidazolidin-2-on (= Ureidomethacrylat), N-[2-(Acryloxyacetamido)ethyl]imidazolidin-2-on, N-[2-(2-Acryloxyacetamido)ethyl]imidazolidin-2-on und N-[2-(2-Methacryloxyacetamido)ethyl]imidazolidin-2on (Monomere M3a). Die Monomere M2 machen in der Regel bis zu 10 Gew.-%, insbesondere bis 5 Gew.-%, z.B. 0,1 bis 5 Gew.-%, bezogen auf die Gesamtmonomermenge aus. Die Gesamtmenge der Monomere M3 wird in der Regel 10 Gew.-%, insbesondere 9 Gew.-% nicht überschreiten. Sofern erwünscht, machen die Monomere M3a 0,1 bis 10 Gew.-%, insbesondere 0,5 bis 5 Gew.-%, der Gesamtmonomermenge aus.

Unter den physikalisch trocknenden Dispersionen sind insbesondere solche Polymerdispersionen bevorzugt, deren Polymerteilchen wenigstens eine Polymerphase mit einer hohen Glasübergangstemperatur T_{g}1 und wenigstens eine Polymerphase mit einer niedrigeren Glasübergangstemperatur T_{g}2 umfassen, wobei die Differenz zwischen T_{g}1 und T_{g}2 vorteilhafterweise wenigstens 20 K, insbesondere wenigstens 30 K und speziell wenigstens 40 K, z.B. 40 bis 150 K beträgt. Insbesondere liegt T_{g}2 im Bereich von - 60 bis + 40 °C und speziell im Bereich von - 20 bis + 30 °C. T_{g}1 liegt vorzugsweise im Bereich von 50 bis 130 °C und insbesondere im Bereich von 60 bis 120 °C.

Ferner hat es sich als vorteilhaft erwiesen, wenn die Polymerisatteilchen der wässrigen Polymerdispersion einen gewichtsmittleren Polymerisatteilchendurchmesser im Bereich von 50 bis 1000 nm aufweisen (bestimmt mittels Ultrazentrifuge oder Photonenkorrelationsspektroskopie; zur Teilchengrößenbestimmung mittels Ultrazentrifuge siehe z. B. W. Mächtle, Makromolekulare Chemie, 1984, Bd. 185, S. 1025 - 1039, W. Mächtle, Angew. Makromolekulare Chemie, 1988, Bd. 162, S. 35-42). Bei Bindemitteldispersionen mit hohen Feststoffgehalten, z. B. > 50 Gew.-%, bezogen auf das Gesamtgewicht der Bindemitteldispersion, ist es aus Gründen der Viskosität von Vorteil, wenn der gewichtsmittlere Teilchendurchmesser der Polymerteilchen in der Dispersion ≥ 150 nm ist. Der mittlere Teilchendurchmesser wird in der Regel 1000 nm und vorzugsweise 600 nm nicht überschreiten. Ferner ist es von Vorteil, wenn die individuellen Teilchendurchmesser der Polymerisatteilchen nicht einheitlich sind sondern über einen größeren Durchmesserbereich verteilt sind.

Weiterhin enthalten die physikalisch trocknenden Polymerisatdispersionen wenigstens eine oberflächenaktive Substanz zur Stabilisierung der Polymerdispersion. Zu diesem Zweck kommen sowohl die zur Durchführung von radikalischen wässrigen Emulsionspolymerisationen üblicherweise eingesetzten Schutzkolloide als auch Emulgatoren in Betracht. Die oberflächenaktiven Substanzen werden üblicherweise in Mengen von 0,1 bis 10 Gew.-%, vorzugsweise 0,5 bis 5 Gew.-%, bezogen auf die Gesamtmenge der zu polymerisierenden Monomere, verwendet.

Geeignete Schutzkolloide sind beispielsweise Polyvinylalkohole, Stärke- und Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart 1961, S. 411-420.

Bevorzugte oberflächenaktive Substanzen sind Emulgatoren, deren relative Molekulargewichte im Unterschied zu den Schutzkolloiden üblicherweise unter 2000 liegen. Sie können sowohl anionischer, kationischer als auch nichtionischer Natur sein, wobei anionische Emulgatoren und deren Kombination mit nichtionischen Emulgatoren bevorzugt sind. Zu den anionischen Emulgatoren zählen Alkali- und Ammoniumsalze von Alkylsulfaten (Alkylrest: C₈-C₁₂), von Schwefelsäurehalbestern ethoxylierter Alkanole (EO-Grad: 2 bis 50, Alkylrest: C₁₂ bis C₁₈) und ethoxylierter Alkylphenole (EO-Grad: 3 bis 50, Alkylrest: C₄-C₉), von Alkylsulfonsäuren (Alkylrest: C₁₂-C₁₈), von Alkylarylsulfonsäuren (Alkylrest: C₉ bis C₁₈), und von Mono- und Dialkyldiphenylethersulfonaten wie sie z.B. in US 4,269,749 beschrieben sind.

Geeignete nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: C₄-C₉), Ethoxylate langkettiger Alkohole (EO-Grad: 3 bis 50, Alkylrest: C₈-C₃₆), sowie Polyethylenoxid/Polypropylenoxid-Blockcopolymere. Bevorzugt werden Ethoxylate langkettiger Alkanole (Alkylrest: C₁₀-C₂₂, mittlerer Ethoxylierungsgrad: 3 bis 50) und darunter besonders bevorzugt solche auf Basis von Oxoalkoholen und nativen Alkoholen mit einem linearen oder verzweigten C₁₂-C₁₈-Alkylrest und einem Ethoxylierungsgrad von 8 bis 50.

Die erfindungsgemäß verwendeten Oberflächenbehandlungsmittel auf Basis physikalisch trocknender Polymerdispersionen können außerdem übliche Zusätze wie Füllstoffe, Pigmente, Dispergierhilfsmittel für Pigmente/Füllstoffe, Frostschutzmittel, Weichmacher, Verdicker, Biozide und dergleichen in den hierfür üblichen Mengen enthalten. Die Oberflächenbehandlungsmittel können unpigmentiert, d.h. als Klarlacke, niedrigpigmentiert mit Pigmentvolumenkonzentrationen unterhalb 25 % als Lasuren, Hochglanz und Seidenglanzlacke, mit höheren Pigmentvolumenkonzentrationen von > 25 % als Seidenglanz und Mattlacke formuliert werden.

Anstelle oder zusammen mit physikalisch trocknenden Polymerdispersionen können erfindungsgemäß geeignete, polymergebundende wässrige Oberflächenbehandlungsmittel auch wässrige Dispersionen von selbstvernetzenden, UV-härtenden oder thermisch härtbaren Bindemittelpolymeren enthalten. Physikalisch trocknende Polymerdispersionen können auch als Formulierung mit wasserdispergierbaren Alkydharzen und/oder Wachsen eingesetzt werden.

Im Falle selbstvernetzender Polymerdispersionen handelt es sich bekanntermaßen um wässrige Polymerdispersionen, deren Polymere reaktive Gruppen aufweisen, die miteinander oder mit einer darin enthaltenen Vernetzersubstanz unter Bindungsbildung reagieren, d.h. das Polymer weist innerhalb der Polymerkette verschiedene zueinander komplementäre reaktive Gruppen auf oder Polymer und Vernetzersubstanz weisen zueinander komplementäre reaktive Gruppen auf. Beispiele für Paare von Gruppen mit zueinander komplementärer Reaktivität sind die oben im Zusammenhang mit thermisch härtenden Systemen angegebenen Paare funktioneller Gruppen. Insbesondere weist die Polymerkomponente in den selbstvernetzenden Systemen als funktionelle Gruppen auf:
- Carboxylgruppen und/oder Anhydridgruppen, die durch Zugabe von Salzen mehrwertiger Kationen, z.B. Zink- oder Calciumsalzen, oder durch Zugabe eines Polyamins oder eines Polyols vernetzen, oder
- eine Kombination von OH- und Carboxylgruppen, die untereinander reagieren, oder
- Isocyanat-Gruppen, die mit einem Polyol oder einem Polyamin als Vernetzersubstanz reagieren, oder
- OH-Gruppen, die mit einer Vernetzersubstanz reagieren, die ausgewählt ist unter Polyaziridinen, Polycarbodiimiden, wasserdispergierbaren Polyisocyanaten, und Polyepoxiden, z.B. Epoxysilanen, oder
- eine Kombination von Isocyanat-Gruppen, die gegebenenfalls durch geeignete Schutzgruppen reversibel blockiert sind, und OH-Gruppen, oder
- Ketogruppen, die durch Zugabe von Polyaminen, Semicarbaziden oder Polyhydraziden vernetzen, oder
- Harnstoffgruppen, die durch Zugabe von Polyaldehyden wie Glyoxal vernetzen.

Bei den Polymeren selbstvernetzender Dispersionen kann es sich um Polymere auf Basis ethylenisch ungesättigter Monomere, wie zuvor für die physikalisch trocknenden Dispersionen beschrieben, handeln, die entsprechende funktionale Monomere einpolymerisiert enthalten. Geeignet sind auch Polyurethan-basierte Dispersionen, die durch Einbau entsprechender Monomere und/oder durch Wahl der Stöchiometrie der das Polyurethan bildenden Monomere die gewünschten funktionellen Gruppen aufweisen.

Im Falle thermisch härtender Polymerdispersionen handelt es sich bekanntermaßen um wässrige Dispersionen von thermisch härtbaren Polymeren oder Präpolymeren, wie zuvor beschrieben. Insbesondere umfassen derartige Polymerdispersionen wenigstens eine Polymerkomponente auf Basis eines Polyurethans oder auf Basis eines Emulsionspolymerisats ethylenisch ungesättigter Monomere, wobei die Polymerkomponente Hydroxylgruppen, Ketogruppen, Harnstoffgruppen, Epoxid-Gruppen und/oder Carboxylgruppen aufweist, und wenigstens einen niedermolekularen oder polymeren Vernetzer mit wenigstens 2 reaktiven Gruppen wie zuvor genannt.

Oberflächenbehandlungsmittel auf Basis selbstvernetzender und vernetzbarer Polymerdispersionen können die bei den Oberflächenbehandlungsmitteln auf Basis physikalisch trocknender Dispersionen genannten Zusätze enthalten. Häufig enthalten sie einen Katalysator, welcher die Vernetzungsreaktion fördert, z.B. eine Säure oder, im Falle Isocyanat-basierter Systeme, zinnorganische Verbindungen. Sie können in analoger Weise unpigmentiert, d.h. als Klarlacke, niedrigpigmentiert als Lasuren, Hochglanz- und Seidenglanzlacke, und mit höheren Pigmentvolumenkonzentrationen als Seidenglanz und Mattlacke formuliert werden. Wässrige Dispersionen selbstvernetzender und vernetzbarer Polymere zur Herstellung derartiger Oberflächenbehandlungsmittel sind bekannt, und im Handel erhältlich, z.B. unter den Luhydran-Marken A 848S, A 875S und LR8950 der BASF Aktiengesellschaft.

Gemäß einer weiteren Ausführungsform der Erfindung handelt es sich bei dem Oberflächenbehandlungsmittel um ein wasserbasiertes, UV-härtbares Beschichtungsmittel.

Hierbei handelt es sich bekanntermaßen um ein wasserbasiertes Beschichtungsmittel, das als Bindemittelbestandteil wenigstens ein in Wasser dispergiertes Bindemittelpolymer oder -präpolymer enthält, welches ethylenisch ungesättigte Doppelbindungen aufweist, die sich unter Einwirkung elektromagnetischer Strahlung, wie UV- oder Elektronenstrahlung, radikalisch polymerisieren lassen. Bezüglich des Gehalts ethylenisch ungesättigter Doppelbindungen im Polymer und der Art der Doppelbindungen gilt das zuvor gesagte. Insbesondere handelt es sich bei den Doppelbindungen um solche der zuvor definierten Formel A und speziell um Acrylat- oder Methacrylatgruppen. Derartige Polymere werden auch als (meth)acrylatmodifizierte Polymere bezeichnet. Insbesondere handelt es sich bei den in Wasser dispergierten UV-härtbaren Bindemittelpolymeren um (meth)acrylatmodifizierte Polyurethane oder um (meth)acrylatmodifizierte Copolymerisate auf der Basis von (Meth)acrylsäurealkylestern. Bezüglich der Photoinitiatoren, Reaktivverdünner und sonstiger Formulierungsbestandteile gilt das zuvor gesagte. Wässrige Dispersionen von UV-härtbaren Bindemittelpolymeren zur Herstellung derartiger Oberflächenbehandlungsmittel sind bekannt, z.B. aus der oben für UV-Beschichtungsmittel genannten Literatur und im Handel erhältlich, z.B. unter den Laromermarken der BASF Aktiengesellschaft, z.B. Laromer LR 8949.

In einer weiteren Ausführungsform der Erfindung handelt es sich bei dem Oberflächenbehandlungsmittel um ein wasserbasiertes Dual-Cure-Beschichtungsmittel. Hierunter versteht man ein wasserbasiertes Beschichtungsmittel, das ein oder mehrere, in Wasser dispergierte polymere oder oligomere Bindemittelbestandteil enthält, die sowohl durch UV-Strahlung als auch thermisch vernetzbar sind und dementsprechend sowohl funktionelle Gruppen aufweisen, die unter Einwirkung von energiereicher Strahlung polymerisieren, als auch funktionelle Gruppen, die untereinander bei Erwärmen unter Bindungsbildung reagieren. In der Regel umfassen solche Bindemittelsysteme wenigstens ein in Wasser dispergiertes Bindemittelpolymer oder -präpolymer A, das ethylenisch ungesättigte Doppelbindungen, die sich unter Einwirkung elektromagnetischer Strahlung radikalisch polymerisieren lassen, und funktionelle Gruppen aufweist, die untereinander oder mit einem weiteren niedermolekularen, oligomeren oder polymeren Bindemittelbestandteil B, der reaktive funktionelle Gruppen komplementärer Reaktivität und gegebenenfalls UV-härtbare Doppelbindungen aufweist, unter Bindungsbildung reagieren. Beispiele für A sind ungesättigte Hydroxylgruppen tragende Polymere, die ethylenisch ungesättigte Doppelbindungen aufweisen, z.B. Polyesterpolyole. Beispiele für C sind Acrylat- bzw. Methacrylat-Gruppen tragende Polyisocyanate, worin die Isocyanat-Gruppen reversibel blockiert sein können. Beispiele für A sind außerdem Polymere oder Präpolymere mit (Meth)acrylat-Gruppen, die zusätzlich freie oder reversibel blockierte Isocyanat-Gruppen aufweisen, wobei als Komponente B in diesen Fällen eine Polyhydroxyverbindung und/oder ein Polyamin eingesetzt wird. Dual-Cure-Bindemittelsysteme können auch die folgenden Bindemittelbestandteile enthalten: einen ersten oligomeren oder polymeren Bindemittelbestandteil A' mit reaktiven funktionellen Gruppen, z.B. ein Polyisocyanat, einen weiteren gesättigten Bindemittelbestandteil B' mit hierzu komplementären reaktiven Gruppen, z.B. ein OH-Gruppen tragendes Polymer wie ein OH-Gruppen aufweisendes Polyacrylat, und eine zu A' oder B' komplementäre reaktive Gruppen, z.B. OH-Gruppen tragende niedermolekulare, oligomere oder polymere Verbindung, die zusätzlich ethylenisch ungesättigte Doppelbindungen aufweist. Bezüglich des Gehalts ethylenisch ungesättigter Doppelbindungen im Polymer bzw. Oligomer und der Art der Doppelbindungen gilt das zuvor gesagte. Insbesondere handelt es sich bei den Doppelbindungen in Dual-Cure-Systemen um solche der zuvor definierten Formel A und speziell um Acrylat- oder Methacrylatgruppen. Gemäß einer Ausführungsform umfassen die in Wasser dispergierten Dual-Cure-Bindemittel wenigstens ein (meth)acrylatmodifiziertes Polyurethan mit freien OH-Gruppen und/oder reversibel blockierte Isocyanat-Gruppen oder (meth)acrylatmodifizierte Copolymerisate mit freien OH-Gruppen auf der Basis von (Meth)acrylsäurealkylestern und eine Vernetzersubstanz. Gemäß einer anderen Ausführungsform umfassen die in Wasser dispergierten Dual-Cure-Bindemittel ein (Meth)acrylgruppen tragendes reversibel blockiertes Isocyanat und ein ungesättigtes Polyesterpolyol. Gemäß einer weiteren Ausführungsform umfassen die in Wasser dispergierten Dual-Cure-Bindemittel ein (Meth)acrylgruppen tragendes, reversibel blockiertes Isocyanat, eine im Wesentlichen gesättigte polymere Polyolkomponente, z.B. ein OH-Gruppen tragendes Polyacrylat und eine Polyisocyanat-Komponente, deren Isocyanat-Gruppen reversibel blockiert sein können. Die vorgenannten Dual-Cure-Systeme können auch lösungsmittelbasiert sein und sind gleichermaßen für Schritt c) des erfindungsgemäßen Verfahrens geeignet. Bezüglich der Art der reaktiven funktionellen Gruppen und der Art des Vernetzers gilt im Übrigen das zuvor für thermisch härtbare Systeme gesagte. Bezüglich der Photoinitiatoren, Reaktivverdünner, Katalysatoren und sonstiger Formulierungsbestandteile gilt das zuvor gesagte.

Sowohl wässrige als auch nichtwässrige Dual-Cure-Systeme zur Herstellung derartiger Oberflächenbehandlungsmittel sind bekannt, z.B. aus W. Fischer et al. "Dual Cure; Combination of Superior Properties", Radtech Report, November/December 2001, DE 19818735, EP-A 928800, WO 2002/26853 und darin zitierte Literatur, D. B. Pourreau, Acrylic Urethane Dual-Cure Clearcoats, 5: UV & EB Technology Expo & Conference, May 3-5, 2004, Charlotte NC, S. Peeters in "Radiation Curing in Polymer Science and Technology", Vol 3, (J.P. Fouassier, J.F. Rabek, Herausgeber), Elsevier 1993, S. 177, R. Königer, Farbe und Lack, 1999, 105(4), S. 233, K. Maag et al. Progr. Org. Coat. 2000, 40, S. 93, W. Fischer et al., Farbe und Lack, 2001, 107(3), S. 120, C. Decker et al., Macromol. Mater. Eng. 288 (2003), S. 17 und im Handel erhältlich, z.B. unter den Handelsbezeichnungen DynaSeal® und Laromer® der BASF Aktiengesellschaft, z.B. Laromer LR 9000.

Zu den erfindungsgemäß geeigneten wässrigen Beschichtungsmitteln zählen weiterhin wasserbasierte bzw. wasserverdünnbare Alkydharzlacke (s.o.) und deren Abmischungen mit wasserbasierten Beschichtungsmittel auf der Basis wässriger Polymerdispersionen, die selbstvernetzend, vernetzbar oder physikalisch trocknend sein können.

Eine weitere Ausführungsform der Erfindung betrifft wässrige Beizen. Hierbei handelt es sich bekanntermaßen um wässrige Farbstofflösungen, die wenigstens einen Farbstoff in gelöster Form enthalten. Neben Wasser kann die Beize auch mit Wasser mischbare organische Lösungsmittel als Löslichkeitsvermittler enthalten. Ihr Anteil liegt typischerweise unterhalb 50 Vol.-%, bezogen auf das Gesamtgewicht der Zusammensetzung, z.B. im Bereich von 1 bis 50 Vol.-%. Als organische Kosolventien kommen insbesondere Alkohole, speziell Ethanol, Isopropanol, Propanol, Butanol, Glykol, Propandiol, Butylglykol, weiterhin, Etheralkohole wie Diethylenglykol, Butyldiglykol, Methoxypropanol, Dipropylenglykol, Diethylenglykolmethylether, Triethylenglykol sowie Ketone wie Aceton in Betracht. Als Farbstoffe kommen z.B. die in DE-A 10245209 beschriebenen Farbstoffe sowie die gemäß Colour-Index als Disperse-Farbstoffe und als Solvent-Farbstoffe bezeichneten Verbindungen, die auch als Dispersionsfarbstoffe bezeichnet werden, und insbesondere Metallkomplexfarbstoffe in Betracht. Eine Zusammenstellung geeigneter Dispersionsfarbstoffe findet sich beispielsweise in Ullmanns Enzyklopädie der technischen Chemie, 4. Auflage, Bd. 10, S. 155-165 (siehe auch Bd. 7, S. 585ff - Anthrachinonfarbstoffe; Bd. 8, S. 244ff - Azofarbstoffe; Bd. 9, S. 313ff - Chinophthalonfarbstoffe). Auf diese Literaturstelle und die darin genannten Verbindungen wird hiermit ausdrücklich Bezug genommen. Erfindungsgemäß geeignete Dispersionsfarbstoffe und Solvent-Farbstoffe umfassen verschiedenste Farbstoffklassen mit unterschiedlichen Chromophoren, beispielsweise Anthrachinonfarbstoffe, Monoazo- und Disazofarbstoffe, Chinophthalone, Methin- und Azamethinfarbstoffe, Naphthalimidfarbstoffe, Naphthochinonfarbstoffe und Nitrofarbstoffe. Beispiele für erfindungsgemäß geeignete Dispersionsfarbstoffe sind die Dispersionsfarbstoffe der folgenden Colour-Index Liste: C. I. Disperse Yellow 1 - 228, C. I. Disperse Orange 1 - 148, C. I. Disperse Red 1 - 349, C. I. Disperse Violet 1 - 97, C. I. Disperse Blue 1 - 349, C. I. Disperse Green 1 - 9, C. I. Disperse Brown 1 - 21, C. I. Disperse Black 1 - 36. Beispiele für erfindungsgemäß geeignete Solvent-Farbstoffe sind die Verbindungen der folgenden Colour-Index Liste: C. I. Solvent Yellow 2 - 191, C. I. Solvent Orange 1 - 113, C. I. Solvent Red 1 - 248, C. I. Solvent Violet 2 - 61, C. I. Solvent Blue 2 - 143, C. I. Solvent Green 1 - 35, C. I. Solvent Brown 1 - 63, C. I. Solvent Black 3 - 50. Für Beizen geeignete Farbstoffe sind weiterhin Derivate des Naphthalins, des Anthracens, des Perylens, des Terylens, des Quaterrylens, sowie Diketopyrrolopyrrolfarbstoffe, Perinonfarbstoffe, Cumarinfarbstoffe, Isoindolin- und Isoindolinonfarbstoffe, Porphyrinfarbstoffe, Phthalocyanin- und Naphthalocyaninfarbstoffe. Die Konzentration des Farbstoffs in der Beize liegt typischerweise im Bereich von 1 bis 10 Gew.-%, bezogen auf das Gesamtgewicht einer handelsüblichen Beize, wobei man gegebenenfalls die Beize vor der Anwendung mit Wasser auf das 1,5 bis 10-fache ihres ursprünglichen Volumens verdünnt. Beispiele für wässrige Beizen sind die unter den Handelsbezeichnungen Basantol und Basantol U vertriebenen Produkte der BASF-Aktiengesellschaft.

Die Applikation der Oberflächenbehandlungsmittel erfolgt in an sich bekannter Weise, z.B. durch Rollen, Streichen, Rakeln, Sprühen, wobei sich die Applikationsmethode in an sich bekannter Weise nach der Art des Oberflächenbehandlungsmittels, der Art und Form des zu behandelnden Holzes/Holzwerkstoffs und den technischen Gegebenheiten richtet.

Die Applikation des Oberflächenbehandlungsmittels kann in einem Schritt oder auch in mehreren Schritten erfolgen, z.B. in 1, 2 oder 3 Schritten. Weiterhin kann man auch nacheinander 2 oder mehrere Oberflächenbehandlungsmittel, insbesondere Beschichtungsmittel, z.B. ein oder mehrere Primer bzw. Grundierungen in Kombination mit ein oder mehreren Decklacken aufbringen, so dass man einen mehrschichtigen, z.B. einen 2-, 3-, 4- oder 5-schichtigen Beschichtungsaufbau erhält. Zwischen den einzelnen Auftragungsschritten können Trocknungs- und/oder Härtungsschritte durchgeführt werden. Je nach Art des Oberflächenbehandlungsmittels und der gewünschten Beschichtung können die Oberflächenbehandlungsmittel auch nass-in-nass appliziert werden.

Die Auftragsmenge an Oberflächenbehandlungsmittel richtet sich in an sich bekannter Weise nach den gewünschten Eigenschaften der behandelten Oberfläche und liegt typischerweise im Bereich von 1 bis 500 g/m², gerechnet als nichtflüchtige Bestandteile in des Oberflächenbehandlungsmittels. Bei einem mehrschichtigen Aufbau beträgt die Menge an Oberflächenbehandlungsmittel typischerweise 1 bis 200 g/m² je Schicht.

In der Regel umfasst das Applizieren des Oberflächenbehandlungsmittels auch einen Trocknungsschritt. Hierbei werden die gegebenenfalls vorhandenen flüchtigen Bestandteile des Oberflächenbehandlungsmittels entfernt und/oder eine Härtung der im Oberflächenbehandlungsmittel enthaltenen härtbaren Bestandteile durchgeführt. Dementsprechend richten sich die Trocknungsbedingungen in an sich bekannter Weise nach der Art des Oberflächenbehandlungsmittels. Im Falle physikalisch trocknender Beschichtungsmittel liegt die Trocknungstemperatur typischerweise im Bereich von 20 bis 80 °C und die Trocknungsdauer liegt im Bereich von 10 min. bis 24 h. Im Falle thermisch vernetzbarer Systeme hängen Trocknungsdauer und -temperatur in an sich bekannter Weise von der Reaktivität der funktionellen Gruppen und der Art des gewählten Systems ab, wobei grundsätzlich Temperaturen im Bereich von 20 °C bis 220 °C geeignet sind. Die Härtung UV-härtender Systeme erfolgt durch Anwendung von aktinischer Strahlung wie UV-Licht oder Elektronenstrahlung. Bei Dual-Cure-Systemen wird man in der Regel zunächst eine UV-Härtung und anschließend eine thermische Härtung vornehmen.

Das Oberflächenbehandlungsmittel kann auch eine thermoplastische Kunststofffolie, z.B. eine Acrylnitril/Styrol-Acrylat-Folie sein, die unter Anwendung von Vakuum und gegebenenfalls mit Hilfe eines Leimungsmittels auf die Oberfläche eines Holzes oder Holzwerkstoffs laminiert wird. Derartige Mittel und die hierzu erforderlichen Methoden sind dem Fachmann bekannt und unter den Handelsbezeichnungen LuranSkin® und PermaSkin® der BASF-Aktiengesellschaft im Handel erhältlich.

Bei dem Oberflächenbehandlungsmittel kann es sich auch um ein flüssiges Hydrophobierungsmittel handeln, wie es zur Oberflächenbehandlung von Holz häufig eingesetzt wird, z.B. ein Flüssigwachs oder ein Öl, z.B. ein Pflanzenöl wie Rapsöl, Leinöl, ein flüssiges Paraffinöl, z.B. Weißöl oder dergleichen oder ein Silikonöl. In diesen Fällen erreicht man insgesamt eine verbesserte Witterungsstabilität und ein besseres Eindringen des flüssigen Hydrophobiermittels in die Poren des Holzes und damit eine verbesserte Stabilität der behandelten Oberfläche gegen Witterungs- und Feuchtigkeitseinflüsse.

Die folgenden Beispiele sollen die Erfindung verdeutlichen, und sind nicht einschränkend zu verstehen.

### Imprägnieren von Holzmaterialien

### Herstellungsbeispiel 1:

Mit Diethylenglykol und Methanol modifiziertes DMDHEU (mDMDHEU) wurde auf 30 Gew.-% mit Wasser verdünnt und mit 1,5 Gew.-% MgCl₂ x 6 H₂O vermischt. Auf ca. 12 % Holzfeuchte getrocknete Kiefernholzbretter mit den Abmessungen 150 x 10 x 2,5 cm wurden in eine Tränkanlage eingebracht. In der Tränkanlage wurde 30 Minuten ein Vakuum von 40 mbar (absolut) angelegt. Anschließend wurde die Tränkanlage mit dem Imprägniermittel geflutet. Das Vakuum von absolut 50 mbar wurde konstant gehalten. Anschließend wurde für 2 Stunden ein Druck von 10 bar angelegt. Die Druckphase wurde beendet und die Restflüssigkeit entfernt. Die Holzbretter wurden sodann in einer über Temperatur und Luftfeuchtigkeit steuerbaren Trockenkammer gelagert und so fixiert, dass ein Verwerfen unmöglich war. Die Kammer wurde auf 120 °C und eine relative Luftfeuchtigkeit von ca. 95 % gebracht. Diese feuchten Bedingungen wurden solange gehalten, bis 48 Stunden lang im Innern der Holzkörper eine Temperatur von mindestens 120 °C erreicht wurde.

Das anschließende Trocknen der Holzkörper wurde auf einem gut belüfteten Holzstapel durchgeführt. Anschließend wurden die Bretter zu Probebrettchen mit den Abmessungen 30 x 10 x 2,5 cm gesägt.

### Oberflächenbehandlung

### Beispiel 1: nichtwässrige UV-härtbare Beschichtungsmittel

Ein gemäß Herstellungsbeispiel 1 hergestelltes Kiefernholzbrett wurde zunächst mittels einer Spritzpistole mit einem Primer mit 25 g/m² beschichtet und dann in einer IST-Beschichtungsanlage mit 2 UV-Strahlern (je 120 W/cm²) und einer Förderband-Laufgeschwindigkeit von 5 m/min angehärtet. Dann wurde die so erhaltene Beschichtung erneut mit einem Primer mit 25 g/m² beschichtet und in der IST-Beschichtungsanlage bei einer Förderband-Laufgeschwindigkeit von 5 m/min 2 mal ausgehärtet und angeschliffen. Auf die so erhaltene Beschichtung wurde ein Topcoat in einer Menge von 10 g/m² aufgebracht und die so erhaltene Beschichtung wurde in der IST-Beschichtungsanlage bei einer Förderband-Laufgeschwindigkeit von 5 m/min 2-mal ausgehärtet.

Die Zusammensetzungen von Primer und Topcoat sind in Tabelle 1 angegeben.

**Tabelle 1: UV-härtende Beschichtungsmittel:**

| Zusammensetzung | Primer | Topcoat |
|---|---|---|
| Harz A | 64,2 | 43,7 |
| Reaktivverdünner | 21,4 | 43,7 |
| Syloid ED 80 | | 8,7 |
| Microtalc AT 1 | 10,7 | |
| Irgacure 500 | 3,2 | |
| Irgacure 184 | | 3,5 |
| Byk 361 | 0,5 | 0,4 |

| | | |
|---|---|---|
| - Harz A: Laromer® UP 35 D: 55 gew.-%ige Lösung eines ungesättigten Polyesters in Dipropylenglykoldiacrylat, - Reaktivverdünner: Laromer®DPGDA der BASF: Dipropylenglykoldiacrylat, - Syloid ED 80: hochdisperse Kieselsäure - Microtalc AT1: Talkpulver - Irgacure® 500 der Ciba-Spezialitätenchemie (Mischung aus Benzophenon und 1-Benzoyl-1-hydroxycyclohexan im Gew.-Verhältnis 1:1), - Irgacure® 184: Photoinitiator der Ciba-Spezialitätenchemie - Byk 361: Verlaufshilfmittel | | |

### Vergleichsbeispiel 1:

Zu Vergleichszwecken wurde ein unbehandeltes Kiefernholzbrett auf die für Beispiel 1 angegebene Weise beschichtet.

### Beispiel 2: Selbstvernetzendes Beschichtungsmittel:

Ein gemäß Herstellungsbeispiel 1 hergestelltes Kiefernholzbrett wurde zunächst mittels einer Spritzpistole mit einer selbstvernetzenden Beschichtungszusammensetzung gemäß Rezeptur R2 mit einer Nassschichtdicke von 20 µm beschichtet, getrocknet und erneut mit der Beschichtungszusammensetzung gemäß Rezeptur R2 mit einer Nassschichtdicke von 27 µm beschichtet. Anschließend wurde bei Raumtemperatur getrocknet, wobei die Beschichtung nach ca. 2 Tagen ihre Endfestigkeit erreicht hatte.

Zu Vergleichszwecken wurde ein unbehandeltes Kiefernholzbrett in der gleichen Weise beschichtet.

Die so beschichteten Kiefernholzbretter wurden nach 2, 5 und 7 Tagen einem Gitterschnitt-Test nach DIN ISO EN 2409 unterworfen. Die zu Vergleichszwecken hergestellten Kiefernholzbretter erhielten die Note 2, wohingegen die gemäß Beispiel 2 erhaltenen Kiefernholzbretter die Note 2-3 erhielten, wobei im Unterschied zum Vergleich o-berflächlich auch Holz abplatzte.

Die so beschichteten Kiefernholzbretter wurden nach Trocknung bei Raumtemperatur einem UV-Bewitterungstest unterworfen. Die erfindungsgemäßen Bretter zeigten eine geringere Farbveränderung als die Kiefernholzbretter des Vergleichs.

### Rezept R2:

| | |
|---|---|
| 50 Gew.-Teile | Butyglykol |
| 20 Gew.-Teile | Propylenglykolbutylether |
| 20 Gew.-Teile | Dipropylenglykolmonomethylether |
| 5 Gew.-Teile | Sojalecithin (Sojalecithin W250) |
| 4 Gew.-Teile | Entschäumer (Agitan 232, Fa. Münzing Chemie) |
| 15 Gew.-Teile | hochdisperse Kieselsäure (Syloid ED 30) |
| 36 Gew.-Teile | Wasser |
| 780 Gew.-Teile | einer 45 Gew.-%igen, anionischen, selbstvernetzenden wässrigen Poly(meth)acrylat-Dispersion auf Basis von Butylmethacrylat (BASF AG) |
| 70 Gew.-Teile | Polygen WE1. Wässrige Wachsdispersion eines Polyoxidat-Wachses (Wachsoxidat auf Basis eines Polyethylenwachses) |

### Beispiel 3: wässriges Dual-Cure-Beschichtungsmittel:

Ein gemäß Herstellungsbeispiel 1 hergestelltes Kiefernholzbrett wurde mittels einer Spritzpistole mit einer Dual-Cure-Beschichtungszusammensetzung gemäß Rezeptur R3 bzw. mit Rezeptur R3a beschichtet, UV-gehärtet wie in Beispiel 1 und anschließend thermisch gehärtet.

Zu Vergleichszwecken wurde in analoger Weise ein unbehandeltes Kiefernholzbrett beschichtet.

Auf den Kiefernholzbrettern gemäß Herstellungsbeispiel 1 wiesen sowohl das Beschichtungsmittel R3 als auch das Beschichtungsmittel R3a eine deutlich bessere Nasshaftung auf als auf den unbehandelten Kiefernholzbrettern.

Rezeptur R3: 100 Gew.-Teile Laromer® LR 9000 und 3 Gew.-Teile Irgacure 500 (s.o.)

Rezeptur R3a: 100 Gew.-Teile Laromer® LR 9000, 3 Gew.-Teile Irgacure 500 (s.o.) und 10 Gew.-Teile einer 1 gew.-%igen Lösung von Dibutylzinndilaurat in Butylacetat.

Laromer® LR 9000: Isocyanat-funktionalisiertes Allophanat-Polyurethanacrylat

### Beispiel 4:

In zu Beispiel 3 analoger Weise wurden unbehandelte Kiefernholzbrettchen und Kiefernholzbrettern gemäß Herstellungsbeispiel 1 mit einer wässrigen, mit AcrylatGruppen modifizieren Polyurethandispersion (Laromer® LR 8949 der BASF) beschichtet und UV-gehärtet.

Laromer® LR 8949 der BASF: 40 gew.-%ige wässrige Polyurethandispersion; Mₙ ca. 1 000; 0,17 mol Acrylatgruppen/100 g Harz,

### Beispiel 5: wässrige Farbstoffbeizen

Die folgenden kommerziellen Farbstoffbeizen wurden mit Wasser:Ethanol 1:1 auf einen Farbstoffgehalt von 3 Gew.-% verdünnt. Es wurden sowohl Kiefernholzbretter aus Herstellungsbeispiel 1 als auch unbehandelte Kiefernholzbretter mit Schmirgelpapier jeweils auf einer Hälfte glatt geschliffen. Anschließend wurden die verdünnten Beizen aufgetragen und die Brettchen bei 50°C getrocknet.

In allen Fällen zeigten die Kiefernholzbrettchen aus Herstellungsbeispiel 1 ein rascheres Trocknungsverhalten und eine deutlich glattere Oberfläche sowohl auf den geschliffenen als auch den ungeschliffenen Bereichen. Die unbehandelten Brettchen waren verzogen, wohingegen die Brettchen aus Herstellungsbeispiel 1 kein Verziehen zeigten.

### Getestete Beizen:

Basantol U Gelb 145 flüssig
Basantol U Gelb 155 flüssig
Basantol U Orange 255 flüssig
Basantol U Rot 345 flüssig
Basantol U Blau 745 flüssig
Basantol U Schwarz X 84 flüssig
Basantol Gelb 099 flüssig
Basantol Gelb 215 flüssig
Basantol Braun 269 flüssig
Basantol Orange 273 flüssig
Basantol Rot 311 flüssig
Basantol Bordeaux 415 flüssig
Basantol Blau 762 flüssig
Basantol Schwarz X82 flüssig

## Patentansprüche

1. Verfahren zum Behandeln der Oberflächen von Holz oder Holzwerkstoffen, umfassend die folgenden Schritte:
a) Imprägnieren von Holz, Holzwerkstoffen oder Holzmaterialien für die Herstellung von Holzwerkstoffen mit einer härtbaren wässrigen Zusammensetzung, die wenigstens eine vernetzbare Verbindung enthält, die ausgewählt ist unter
α) niedermolekularen Verbindungen V, welche wenigstens zwei N-gebundene Gruppen der Formel CH₂OR, worin R für Wasserstoff oder C₁-C₄-Alkyl steht, und/oder eine zwei Stickstoffatome verbrückende 1,2-Bishydroxyethan-1,2-diyl-Gruppe aufweisen,
γ) Mischungen der Verbindung V mit wenigstens einem Alkohol, der unter C₁-C₆-Alkanolen, C₂-C₆-Polyolen und Oligoalkylenglykolen ausgewählt ist;
wobei man die Bedingungen des Imprägnierens so wählt, dass die aufgenommene Menge an härtbaren Bestandteilen der wässrigen Zusammensetzung wenigstens 5 Gew.-%, bezogen auf die Trockenmasse des unbehandelten Holzes oder Holzwerkstoffs beträgt;
b) Behandeln des in Schritt a) erhaltenen Materials bei erhöhter Temperatur und gegebenenfalls Weiterverarbeitung zu einem Holzwerkstoff; und
c) Behandeln wenigstens einer Oberfläche des zu behandelnden Holzes oder Holzwerkstoffs mit einem Oberflächenbehandlungsmittel und gegebenenfalls Trocknen des Oberflächenbehandlungsmittels in an sich bekannter Weise.

2. Verfahren nach Anspruch 1, wobei das Oberflächenbehandlungsmittel ein polymeres Bindemittel und/oder ein zu einem polymeren Bindemittel aushärtendes Präpolymer enthält.

3. Verfahren nach Anspruch 2, wobei das Oberflächenbehandlungsmittel ein durch Wärme oder UV-Strahlung vernetzbares Polymer und/oder Präpolymer enthält.

4. Verfahren nach Anspruch 3, wobei das Bindemittel ein Polymer oder Präpolymer ist, das Acrylat- und/oder Methacrylatgruppen umfasst.

5. Verfahren nach Anspruch 3, wobei das Bindemittel einen ungesättigten Polyester umfasst.

6. Verfahren nach Anspruch 3, wobei das Bindemittel ein thermisch härtendes 2-Komponenten-System ist.

7. Verfahren nach Anspruch 2, wobei das Oberflächenbehandlungsmittel ein Nitrocellulose-Lack ist.

8. Verfahren nach Anspruch 2, wobei das Oberflächenbehandlungsmittel wenigstens ein Alkydharz als Bindemittel umfasst.

9. Verfahren nach einem der vorhergehenden Ansprüche, wobei das Oberflächenbehandlungsmittel ausgewählt ist unter Wasser-basierten Oberflächenbehandlungsmitteln.

10. Verfahren nach Anspruch 9, wobei das Oberflächenbehandlungsmittel ein polymeres Bindemittel in Form einer wässrigen Polymerdispersion umfasst.

11. Verfahren nach Anspruch 10, wobei die wässrige Polymerdispersion eine physikalisch trocknende Dispersion ist.

12. Verfahren nach Anspruch 10, wobei die wässrige Polymerdispersion eine selbstvernetzende Dispersion ist.

13. Verfahren nach Anspruch 10, wobei die wässrige Polymerdispersion Acrylat- und/oder Methacrylatgruppen aufweist.

14. Verfahren nach Anspruch 9, wobei das Oberflächenbehandlungsmittel ein wasserbasierter Alkydharz-Lack ist.

15. Verfahren nach Anspruch 9, wobei das Oberflächenbehandlungsmittel eine wässrige Beize ist.

16. Verfahren nach einem der vorhergehenden Ansprüche, wobei die vernetzbare Verbindung der härtbaren Zusammensetzung ausgewählt ist unter
- 1,3-Bis(hydroxymethyl)-4,5-dihydroxyimidazolidin-2-on,
- 1,3-Bis(hydroxymethyl)-4,5-dihydroxyimidazolidinon, das mit einem C₁-C₆Alkanol, einem C₂-C₆-Polyol oder einem Oligoalkylenglykol modifiziert ist,
- 1,3-Bis(hydroxymethyl)harnstoff,
- 1,3-Bis(methoxymethyl)harnstoff,
- 1-Hydroxymethyl-3-methylharnstoff,
- 1,3-Bis(hydroxymethyl)imidazolidin-2-on (Dimethylolethylenharnstoff),
- 1,3-Bis(hydroxymethyl)-1,3-hexahydropyrimidin-2-on (Dimethylolpropylenharnstoff),
- 1,3-Bis(methoxymethyl)-4,5-dihydroxyimidazolidin-2-on (DMeDHEU),
- Tetra(hydroxymethyl)acetylendiharnstoff.

17. Verfahren nach einem der vorhergehenden Ansprüche, wobei Konzentration an vernetzbarer Verbindung in der wässrigen härtbaren Zusammensetzung im Bereich von 10 bis 60 Gew.-%, bezogen auf das Gesamtgewicht der Zusammensetzung liegt.

18. Verfahren nach einem der vorhergehenden Ansprüche, wobei die wässrige Zusammensetzung zusätzlich einen Katalysator K enthält, welcher eine Härtung der vernetzbaren Verbindung bewirkt.

19. Verfahren nach Anspruch 18, wobei der Katalysator K ausgewählt ist unter Metallsalzen aus der Gruppe der Metallhalogenide, Metallsulfate, Metallnitrate, Metallphosphate, Metalltetrafluoroborate; Bortrifluorid; Ammoniumsalzen aus der Gruppe der Ammoniumhalogenide, Ammoniumsulfat, Ammoniumoxalat und Diammoniumphosphat; organischen Carbonsäuren, organischen Sulfonsäuren, Borsäure, Phosphorsäure, Schwefelsäure und Salzsäure.

20. Oberflächenbehandeltes Holz oder Holzwerkstoff, das/der durch ein Verfahren nach einem der vorhergehenden Ansprüche erhältlich ist.

## Claims

1. A method for the treatment of the surfaces of wood or woodbase materials, which comprises the following steps:
a) impregnation of wood, woodbase materials or wood materials for the production of woodbase materials with a curable aqueous composition which comprises at least one crosslinkable compound which is selected from
α) low molecular weight compounds V which have at least two N-bonded groups of the formula CH₂OR, where R is hydrogen or C₁-C₄-alkyl, and/or a 1,2-bishydroxyethane-1,2-diyl group bridging two nitrogen atoms,
γ) mixtures of the compound V with at least one alcohol which is selected from C₁-C₆-alkanols, C₂-C₆-polyols and oligoalkylene glycols;
the conditions of the impregnation being chosen so that the amount of curable constituents of the aqueous composition which is absorbed is at least 5% by weight, based on the dry mass of the untreated wood or woodbase material;
b) treatment of the material obtained in step a) at elevated temperature and optionally further processing to give a woodbase material; and
c) treatment of at least one surface of the wood or woodbase material to be treated with a surface treatment composition and optionally drying of the surface treatment composition in a manner known per se.

2. The method according to claim 1, the surface treatment composition comprising a polymeric binder and/or a prepolymer curing in the form of a polymeric binder.

3. The method according to claim 2, the surface treatment composition comprising a polymer and/or prepolymer crosslinkable by heat or UV radiation.

4. The method according to claim 3, the binder being a polymer or prepolymer which comprises acrylate and/or methacrylate groups.

5. The method according to claim 3, the binder comprising an unsaturated polyester.

6. The method according to claim 3, the binder being a heat-curable 2-component system.

7. The method according to claim 2, the surface treatment composition being a nitrocellulose varnish.

8. The method according to claim 2, the surface treatment composition comprising at least one alkyd resin as a binder.

9. The method according to any of the preceding claims, the surface treatment composition being selected from water-based surface treatment compositions.

10. The method according to claim 9, the surface treatment composition comprising a polymeric binder in the form of an aqueous polymer dispersion.

11. The method according to claim 10, the aqueous polymer dispersion being a physically drying dispersion.

12. The method according to claim 10, the aqueous polymer dispersion being a self-crosslinking dispersion.

13. The method according to claim 10, the aqueous polymer dispersion having acrylate and/or methacrylate groups.

14. The method according to claim 9, the surface treatment composition being a water-based alkyd resin varnish.

15. The method according to claim 9, the surface treatment composition being an aqueous stain.

16. The method according to any of the preceding claims, the crosslinkable compound of the curable composition being selected from
- 1,3-bis(hydroxymethyl)-4,5-dihydroxyimidazolidin-2-one,
- 1,3-bis(hydroxymethyl)-4,5-dihydroxyimidazolidinone which is modified with a C₁-C₆-alkanol, a C₂-C₆-polyol or an oligoalkylene glycol,
- 1,3-bis(hydroxymethyl)urea,
- 1,3-bis(methoxymethyl)urea;
- 1-hydroxymethyl-3-methylurea,
- 1,3-bis(hydroxymethyl)imidazolidin-2-one (dimethylolethyleneurea),
- 1,3-bis(hydroxymethyl)-1,3-hexahydropyrimidin-2-one (dimethylolpropyleneurea)
- 1,3-bis(methoxymethyl)-4,5-dihydroxyimidazolidin-2-one (DMeDHEU),
- tetra(hydroxymethyl)acetylenediurea.

17. The method according to any of the preceding claims, the concentration of crosslinkable compound in the aqueous curable composition being in the range from 10 to 60% by weight, based on the total weight of the composition.

18. The method according to any of the preceding claims, the aqueous composition additionally comprising a catalyst K which effects curing of the crosslinkable compound.

19. The method according to claim 18, the catalyst K being selected from metal salts from the group consisting of the metal halides, metal sulfates, metal nitrates, metal phosphates, metal tetrafluoroborates; boron trifluoride; ammonium salts from the group consisting of the ammonium halides, ammonium sulfate, ammonium oxalate and diammonium phosphate; organic carboxylic acids, organic sulfonic acids, boric acid, phosphoric acid, sulfuric acid and hydrochloric acid.

20. A surface-treated wood or woodbase material which is obtainable by a method according to any of the preceding claims.

## Revendications

1. Procédé pour le traitement des surfaces en bois ou de matériaux à base de bois, comprenant les étapes suivantes
a) imprégnation du bois, des matériaux à base de bois ou des matières à base de bois pour la fabrication de matériaux à base de bois par une composition aqueuse durcissable, qui contient au moins un composé réticulable, qui est choisi parmi
α) les composés de bas poids moléculaire V, qui présentent au moins deux groupes liés par N de formule CH₂OR, où R représente hydrogène ou C₁-C₄-alkyle, et/ou un groupe 1,2-bishydroxyéthane-1,2-diyle formant un pont entre deux atomes d'azote,
γ) les mélanges du composé V avec au moins un alcool, qui est choisi parmi les C₁-C₆-alcanols, les C₂-C₆-polyols et les oligoalkylèneglycols ;
en choisissant les conditions de l'imprégnation de manière telle que la quantité absorbée de constituants durcissables de la composition aqueuse vaille au moins 5% en poids, par rapport à la masse sèche du bois ou du matériau à base de bois non traité ;
b) traitement du matériau obtenu dans l'étape a) à une température augmentée et le cas échéant transformation ultérieure en un matériau à base de bois ; et
c) traitement d'au moins une surface du bois ou du matériau à base de bois à traiter avec un agent de traitement de surface et le cas échéant séchage de l'agent de traitement de surface de manière connue en soi.

2. Procédé selon la revendication 1, l'agent de traitement de surface contenant un liant polymère et/ou un prépolymère durcissant en un liant polymère.

3. Procédé selon la revendication 2, l'agent de traitement de surface contenant un polymère et/ou un prépolymère durcissant sous l'effet de la chaleur ou d'un rayonnement UV.

4. Procédé selon la revendication 3, le liant étant un polymère ou un prépolymère, qui comprend des groupes acrylate et/ou méthacrylate.

5. Procédé selon la revendication 3, le liant comprenant un polyester insaturé.

6. Procédé selon la revendication 3, le liant étant un système thermodurcissable à 2 composants.

7. Procédé selon la revendication 2, l'agent de traitement de surface étant une laque de nitrocellulose.

8. Procédé selon la revendication 2, l'agent de traitement de surface comprenant au moins une résine alkyde comme liant.

9. Procédé selon l'une quelconque des revendications précédentes, l'agent de traitement de surface étant choisi parmi les agents de traitement de surface à base d'eau.

10. Procédé selon la revendication 9, l'agent de traitement de surface comprenant un liant polymère sous forme d'une dispersion aqueuse de polymère.

11. Procédé selon la revendication 10, la dispersion aqueuse de polymère étant une dispersion séchant physiquement.

12. Procédé selon la revendication 10, la dispersion aqueuse de polymère étant une dispersion autoréticulante.

13. Procédé selon la revendication 10, la dispersion aqueuse de polymère présentant des groupes acrylate et/ou méthacrylate.

14. Procédé selon la revendication 9, l'agent de traitement de surface étant une laque de résine alkyde à base d'eau.

15. Procédé selon la revendication 9, l'agent de traitement de surface étant une teinture aqueuse.

16. Procédé selon l'une quelconque des revendications précédentes, le composé réticulable de la composition durcissable étant choisi parmi :
- la 1,3-bis(hydroxyméthyl)-4,5-dihydroxyimidazolidin-2-one,
- la 1,3-bis(hydroxyméthyl)-4,5-dihydroxyimidazolidinone, qui est modifiée par un C₁-C₆-alcanol, un C₂-C₆-polyol ou un oligoalkylèneglycol,
- la 1,3-bis(hydroxyméthyl)urée,
- la 1,3-bis(méthoxyméthyl)urée,
- la 1-hydroxyméthyl-3-méthylurée,
- la 1,3-bis(hydroxyméthyl)imidazolidin-2-one (diméthyloléthylène-urée),
- la 1,3-bis(hydroxyméthyl)-1,3-hexahydropyrimidin-2-one (diméthylolpropylène-urée),
- la 1,3-bis(méthoxyméthyl)-4,5-dihydroxyimidazolidin-2-one (DMeDHEU),
- la tétra(hydroxyméthyl)acétylènediurée.

17. Procédé selon l'une quelconque des revendications précédentes, la concentration en composé réticulable dans la composition aqueuse durcissable étant située dans la plage de 10 à 60% en poids, par rapport au poids total de la composition.

18. Procédé selon l'une quelconque des revendications précédentes, la composition aqueuse contenant en outre un catalyseur K qui provoque un durcissement du composé réticulable.

19. Procédé selon la revendication 18, le catalyseur K étant choisi parmi les sels métalliques du groupe formé par les halogénures métalliques, les sulfates métalliques, les nitrates métalliques, les phosphates métalliques, les tétrafluoroborates métalliques ; le trifluorure de bore ; les sels d'ammonium du groupe formé par les halogénures d'ammonium, le sulfate d'ammonium, l'oxalate d'ammonium et le phosphate de diammonium ; les acides carboxyliques organiques, les acides sulfoniques organiques, l'acide borique, l'acide phosphorique, l'acide sulfurique et l'acide chlorhydrique.

20. Bois ou matériau à base de bois, traité en surface, qui peut être obtenu par un procédé selon l'une quelconque des revendications précédentes.
